# EUROPEAN PATENT SPECIFICATION

(11) **EP 3 903 899 B1**
(45) Date of publication and mention of the grant of the patent: **29.01.2025**
(21) Application number: 19901994.4
(22) Date of filing: 24.12.2019
(51) Int. Cl.: B01D 19/00, B01D 61/00, B01D 61/58, B01D 63/02

(54) **DEGASSING SYSTEM, METHOD FOR DEGASSING LIQUIDS AND DEGASSING-SYSTEM MANUFACTURING METHOD**
ENTGASUNGSSYSTEM, VERFAHREN ZUM ENTGASEN VON FLÜSSIGKEITEN UND VERFAHREN ZUR HERSTELLUNG EINES ENTGASUNGSSYSTEMS
SYSTÈME DE DÉGAZAGE, PROCÉDÉ DE DÉGAZAGE DE LIQUIDES ET PROCÉDÉ DE FABRICATION DE SYSTÈME DE DÉGAZAGE

(30) Priority: 28.12.2018 JP 2018246967
(43) Date of publication of application: 03.11.2021
(73) Proprietor: DIC Corporation, Tokyo 174-8520 (JP)
(72) Inventor: YAMAMOTO Wataru, Ichihara-shi, Chiba 290-8585 (JP); IGARI Katsuhiko, Ichihara-shi, Chiba 290-8585 (JP); SANO Kenji, Ichihara-shi, Chiba 290-8585 (JP); OI Kazumi, Ichihara-shi, Chiba 290-8585 (JP)
(74) Representative: Kraus & Lederer PartGmbB
(86) International application number: PCT/JP2019/050650
(87) International publication number: WO 2020/138096

(56) References cited:
- WO-A1-2015/012293
- JP-A- 2003 033 629
- JP-A- 2007 253 105
- JP-A- 2007 253 105
- JP-A- H07 178 322
- JP-A- H11 226 368
- JP-A- S57 102 201
- JP-A- S61 222 509
- US-A- 6 149 817

## Description

### Technical Field

An aspect of the present invention relates to a degasification system in which a plurality of degasification units are housed in parallel in a housing, a liquid degasification method using the degasification system, and a method for manufacturing the degasification system.

### Background Art

In the related art, a degasification unit that degasifies a liquid using hollow fiber membranes is known. Further, a degasification system in which a plurality of degasification units are housed in a housing to cope with an increase in size or flow rate is also known (see Patent Literature 1, for example).

### Citation List

### Patent Literature

[Patent Literature 1] Japanese Patent No. 4593719. Other degasification systems are disclosed in JP2007253105 and JH07178322.

### Summary of Invention

### Technical Problem

Incidentally, in a case in which a plurality of degasification units are housed in parallel in a housing, it was thought that a liquid flows through all the degasification units with the same flow rate. However, as a result of research by the present inventors, it has been found that a liquid may not always flow through all the degasification units with the same flow rate. That is, it has been found that the flow rates of the liquid flowing through the degasification units differ depending on the distance from the central axis of the housing. Since the degasification performance of a degasification unit changes depending on the flow rate of the liquid flowing through the degasification unit, it is assumed that the degasification performance of the entire degasification system deteriorates when the flow rates of the liquid flowing through each of the degasification units differ.

Therefore, an object of the aspect of the present invention is to provide a degasification system capable of reducing deviation in the flow rate of a liquid flowing through a plurality of degasification units, a liquid degasification method using the degasification system, and a method for manufacturing the degasification system.

### Solution to Problem

A degasification system according to an aspect of the present invention includes a plurality of degasification units configured as defined in claim 1.

In the degasification system, the plurality of degasification units are housed in parallel in the cylindrical housing. Here, in a case in which the pressure losses of the liquid flowing through the plurality of degasification units are the same, the flow rates of the liquid flowing through the degasification units differ depending on the distance from the central axis of the housing. However, in this degasification system, the plurality of degasification units are configured such that the pressure losses of the liquid differ depending on the distance from the central axis of the housing. This difference in the pressure loss acts to offset the above difference in the flow rate. As a result, it is possible to reduce the deviation in the flow rate of the liquid flowing through the plurality of degasification units. As a result, for example, the degasification performance of the degasification system in its entirety can be improved.

The degasification system includes a suction pipe communicating with an inside of the hollow fiber membranes and penetrating the housing to suction the inside of the hollow fiber membranes. In the degasification system, by providing the suction pipe, it is possible to appropriately degasify the liquid in the degasification unit, and it is possible to appropriately discharge the degasification gas to the outside of the housing.

Among the plurality of degasification units, the degasification unit that overlaps the inlet when seen in a direction along the central axis may be configured such that the pressure loss of the liquid therein is larger than that in the degasification unit that does not overlap the inlet when seen in a direction along the central axis. Since the degasification unit that overlaps the inlet when seen in a direction along the central axis receives a stronger supply pressure of the liquid from the inlet than that in the degasification unit that does not overlap the inlet when seen in a direction along the central axis, the liquid easily flows in the degasification unit that overlaps the inlet when seen in a direction along the central axis. In the degasification system, since the degasification unit that overlaps the inlet when seen in a direction along the central axis is configured such that the pressure loss of the liquid therein is larger than that in the degasification unit that does not overlap the inlet when seen in a direction along the central axis, this difference in the pressure loss acts to offset the difference in the supply pressure of the liquid. As a result, it is possible to reduce the deviation in the flow rate of the liquid flowing through these degasification units.

Incidentally, as described above, in a case in which the pressure losses of the liquid flowing through the plurality of degasification units are the same, the flow rate of the liquid flowing through the degasification unit tends to decrease as the degasification unit becomes further away from the central axis of the housing. However, as a result of research by the present inventors, it was found that the above tendency is reversed in an outer region from the inner peripheral surface of the housing to a position corresponding to 0.7 times the outer diameter of the degasification unit toward the central axis side. That is, it was found that in the outer region, the flow rate of the liquid flowing through the degasification unit tends to increase as the degasification unit becomes further away from the central axis of the housing. It is assumed that this is because, in the outer region, the liquid flowing in the housing is pushed back against the inner peripheral surface of the housing, and thus the flow rate of the liquid flowing through the degasification unit increases.

Based on this findings, in a case in which a region from an inner peripheral surface of the housing to a position corresponding to 0.7 times an outer diameter of the degasification unit toward the central axis side is defined as an outer region and a region inside the outer region is defined as an inner region, in the inner region, the plurality of degasification units may have an inner degasification unit and an outer degasification unit which is farther from the central axis than the inner degasification unit, and the inner degasification unit may be configured such that the pressure loss of the liquid therein is larger than that in the outer degasification unit. In a case in which the pressure losses of the liquid flowing through the plurality of degasification units are the same, in the inner region, the flow rate of the liquid flowing through the degasification unit tends to decrease as the degasification unit becomes further away from the central axis of the housing. In the degasification system, since the inner degasification unit is configured such that the pressure loss of the liquid therein is larger than that in the outer degasification unit, this difference in the pressure loss acts to offset the above difference in the flow rate. As a result, it is possible to reduce the deviation in the flow rate of the liquid flowing through the inner degasification unit and the outer degasification unit.

Further, in a case in which a region from an inner peripheral surface of the housing to a position corresponding to 0.7 times an outer diameter of the degasification unit toward the central axis side is defined as an outer region, a region inside the outer region is defined as an inner region, and all the degasification units are disposed in the inner region, the plurality of degasification units may be configured such that the pressure loss of the liquid increases as the degasification unit becomes closer to the central axis. In the degasification system, in a case in which all the degasification units are disposed in the inner region, the plurality of degasification units are configured such that the pressure loss of the liquid increases as the degasification unit becomes closer to the central axis, and thus it is possible to appropriately reduce the deviation in the flow rate of the liquid flowing through the plurality of degasification units.

On the other hand, in a case in which a region from an inner peripheral surface of the housing to a position corresponding to 0.7 times an outer diameter of the degasification unit toward the central axis side is defined as an outer region, a region inside the outer region is defined as an inner region, at least one degasification unit is disposed in the outer region, and remaining degasification units are disposed in the inner region, the degasification units disposed in the inner region may be configured such that the pressure loss of the liquid increases as the degasification unit becomes closer to the central axis. In the degasification system, in a case in which at least one degasification unit is disposed in the outer region and the remaining degasification units are disposed in the inner region, the degasification units disposed in the inner region are configured such that the pressure loss of the liquid increases as the degasification unit becomes closer to the central axis, and thus it is possible to appropriately reduce the deviation in the flow rate of the liquid flowing through the degasification units in the inner region.

In this case, the degasification unit disposed in the outer region may be configured such that the pressure loss of the liquid therein is larger than that in the degasification unit closest to the outer region among the degasification units disposed in the inner region. In the degasification system, since the degasification unit disposed in the outer region is configured such that the pressure loss of the liquid therein is larger than that in the degasification unit closest to the outer region among the degasification units disposed in the inner region, it is possible to appropriately reduce the deviation in the flow rate of the liquid even between this degasification unit disposed in the inner region and the degasification unit disposed in the outer region.

In the degasification unit, a plurality of degasification modules may be connected, each of the plurality of the degasification modules may include a hollow fiber membrane bundle having a plurality of hollow fiber membranes arranged around a liquid supply path through which a liquid is supplied and a cylinder which houses the hollow fiber membrane bundle and in which discharge ports for discharging the liquid are formed, and the degasification unit may have a connection supply pipe which connects the liquid supply paths of the plurality of degasification modules in series and in which openings through which the liquid passes are formed at positions corresponding to the plurality of degasification modules such that the liquid is supplied to the hollow fiber membrane bundles of the plurality of degasification modules in parallel.

A liquid degasification method according to an aspect of the present invention in any one of the above degasification systems includes degasifying a liquid by supplying the liquid from the inlet to the plurality of degasification units and depressurizing an inside of the plurality of hollow fiber membranes of each of the plurality of degasification units.

A degasification unit according to an aspect of the present invention used in any one of the above degasification systems includes a hollow fiber membrane bundle in which a plurality of hollow fiber membranes are bundled in a cylindrical shape; and a cylinder in which the hollow fiber membrane bundle is housed.

A degasification module according to an aspect of the present invention used in the above degasification system includes a hollow fiber membrane bundle having a plurality of hollow fiber membranes arranged around a liquid supply path through which a liquid is supplied; and a cylinder which houses the hollow fiber membrane bundle and in which discharge ports for discharging the liquid are formed.

A method for manufacturing a degasification system according to an aspect of the present invention is defined in claim 9.

**In** this case, the method for manufacturing a degasification system may further include preparing a plurality of degasification modules each having a hollow fiber membrane bundle having a plurality of hollow fiber membranes arranged around a liquid supply path through which a liquid is supplied and a cylinder which houses the hollow fiber membrane bundle and in which discharge ports for discharging the liquid are formed, and a connection supply pipe in which a plurality of openings through which the liquid passes are formed; and inserting the connection supply pipe into the liquid supply paths of the plurality of degasification modules to connect the liquid supply paths of the plurality of degasification modules in series by the connection supply pipe and disposing the plurality of openings at positions corresponding to the plurality of degasification modules such that the liquid is supplied to the hollow fiber membrane bundles of the plurality of degasification modules in parallel, to manufacture the degasification unit.

A method for producing natural resources according to an aspect not of the present invention in any one of the degasification systems includes a degasification step of degasifying a liquid by supplying the liquid from the inlet to the plurality of degasification units and depressurizing an inside of the plurality of hollow fiber membranes of each of the plurality of degasification units; and a press-in step of pressing-in the liquid degasified in the degasification step into a natural resource mining site.

### Advantageous Effects of Invention

According to the aspect of the present invention, a degasification system capable of reducing deviation in the flow rate of a liquid flowing through a plurality of degasification units is provided.

### Brief Description of Drawings

FIG 1 is a schematic cross-sectional view of a degasification system according to an embodiment.
FIG 2 is a schematic cross-sectional view along line II-II shown in FIG 1.
FIG 3 is a schematic cross-sectional view of a degasification system for explaining an example of a degasification unit.
FIG 4 is a schematic cross-sectional view of a degasification system for explaining an example of a degasification unit.
FIG 5 is a schematic cross-sectional view along line V-V shown in FIG 3 or 4.
FIG 6 is a schematic front view of the degasification unit.
FIG 7 is a schematic cross-sectional view of the degasification unit.
FIG 8 is a schematic cross-sectional view of an end portion of a hollow fiber membrane bundle.
FIG 9 is a schematic cross-sectional view of a degasification system of reference examples.
FIG 10 is a table showing the conditions of each reference example.
FIG 11 is a table showing the flow rates of degasification units in each row in Reference Examples 1 to 8.
FIG 12 is a graph showing the flow rates of degasification units in each row in Reference Examples 1 to 4.
FIG 13 is a graph showing the flow rates of degasification units in each row in Reference Examples 2 and 5.
FIG 14 is a graph showing the flow rates of degasification units in each row in Reference Examples 6 to 8.
FIG 15 is a view for explaining an outer region and an inner region of a housing.

### Description of Embodiments

Hereinafter, in the description based on the drawings, the same elements or similar elements having the same functions are designated by the same reference signs, and duplicate descriptions will be omitted.

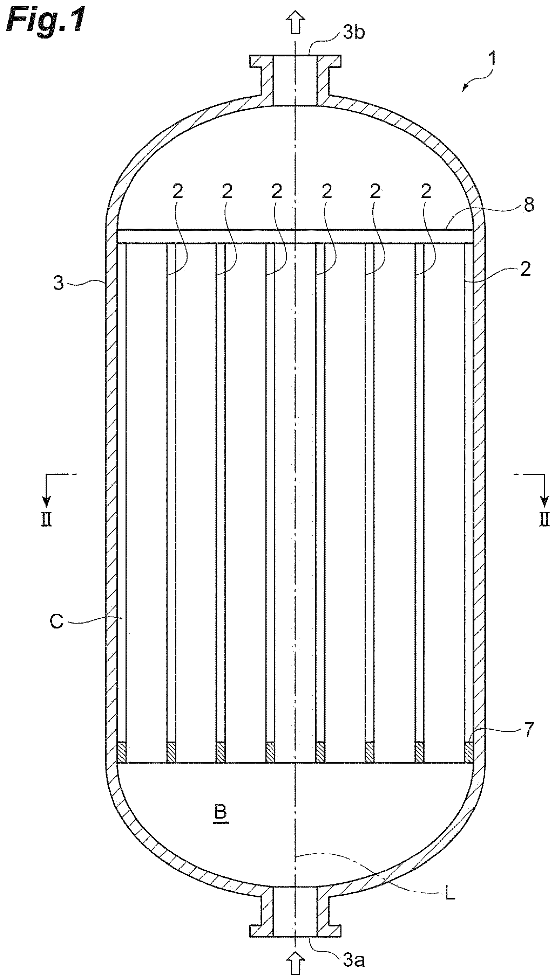

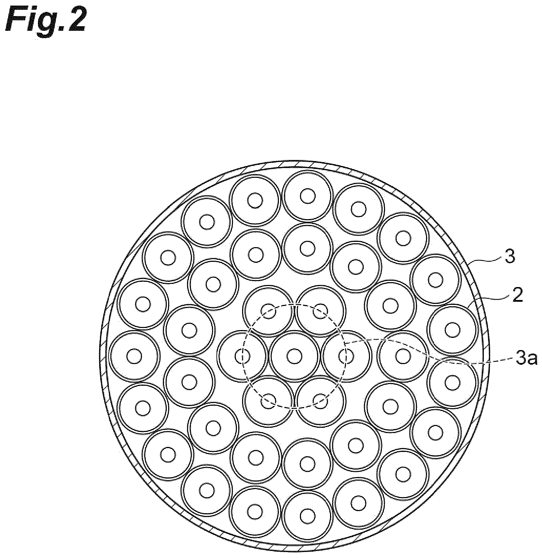

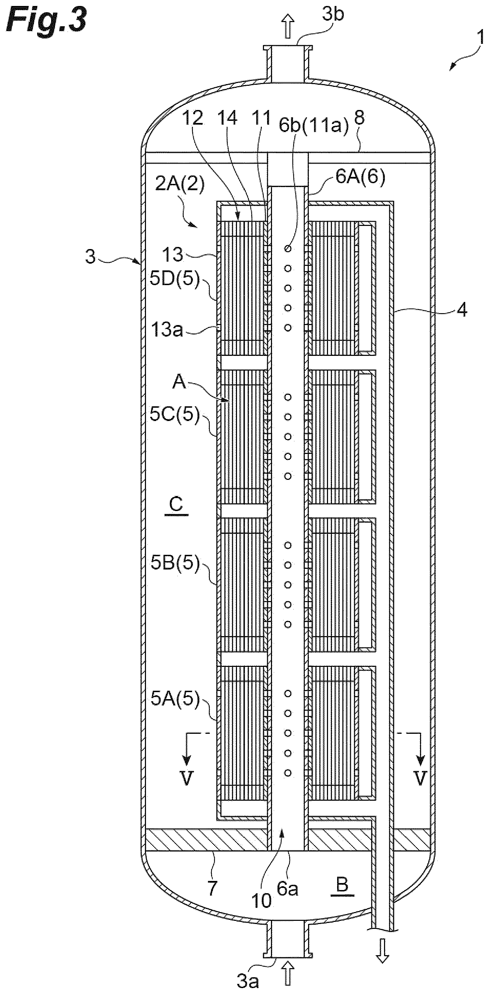

The degasification system of the present embodiment is a system for degasifying a liquid. As the liquid to be degasified by the degasification system, water is exemplified. As shown in FIGS. 1 and 2, the degasification system 1 of the present embodiment includes a plurality of degasification units 2, a housing 3 which houses the degasification unit 2, and a suction pipe 4 (see FIGS. 3 to 5).

### [Degasification unit]

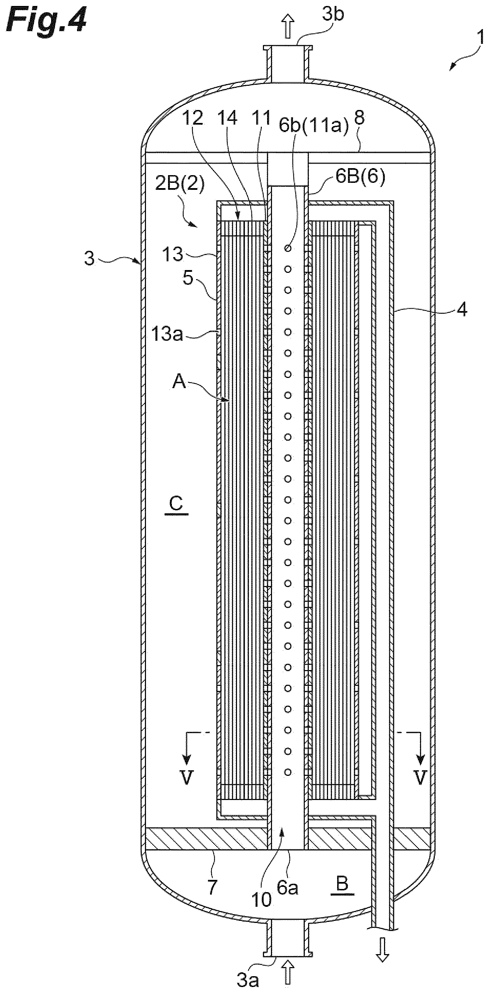

For example, the degasification unit 2 may be constituted by a plurality of degasification modules 5 being connected to each other as in a degasification unit 2A shown in FIG 3 and may be constituted by one degasification module 5 as in a degasification unit 2B shown in FIG 4. The degasification unit 2A shown in FIG 3 and the degasification unit 2B shown in FIG 4 each show an example of the degasification unit 2. Further, in FIGS. 3 and 4, to make the drawings easier to see, only one of the plurality of degasification units 2 is illustrated, and the remaining degasification units 2 are omitted.

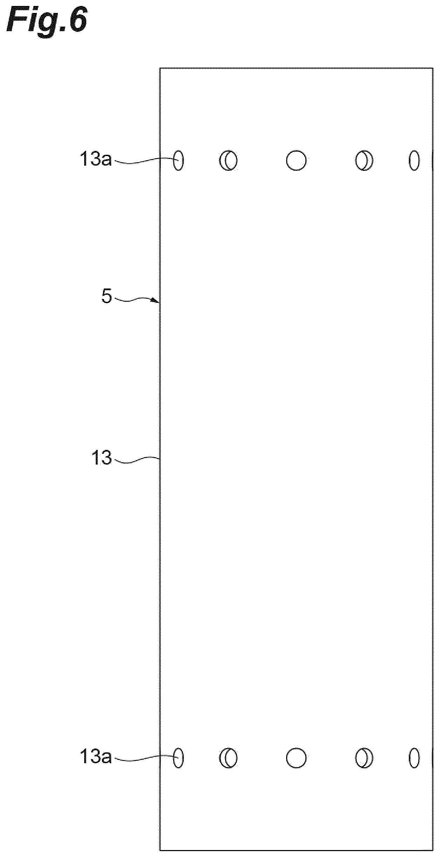

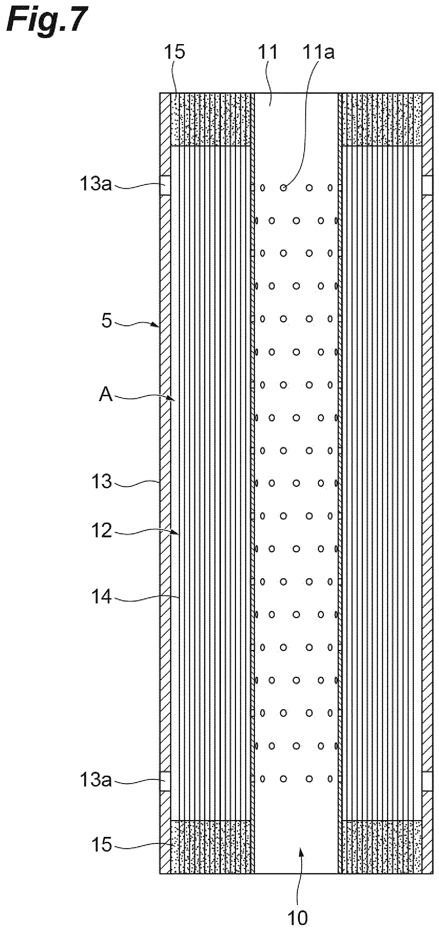

As shown in FIGS. 6 and 7, the degasification module 5 includes, for example, a module inner pipe 11, a hollow fiber membrane bundle 12, and a module container (a cylinder) 13.

The module inner pipe 11 is a pipe on an inner peripheral side of which a liquid supply path 10 to which a liquid such as water is supplied is formed. The module inner pipe 11 is formed, for example, in a circular pipe shape extending linearly. A plurality of inner pipe openings 11a are formed in the module inner pipe 11. The inner pipe openings 11a are for passing the liquid supplied to the liquid supply path 10 of the module inner pipe 11. The number, the positions, the sizes, and the like of the inner pipe openings 11a are not particularly limited.

The hollow fiber membrane bundle 12 has a plurality of hollow fiber membranes 14 arranged around the module inner pipe 11. Therefore, the liquid supply path 10 is disposed on the inner peripheral side of the hollow fiber membrane bundle 12. The hollow fiber membrane bundle 12 is configured by, for example, the plurality of hollow fiber membranes 14 being bundled in a cylindrical shape such as a circular cylindrical shape. The hollow fiber membrane 14 is a hollow fiber-like membrane that allows a gas to permeate but does not allow a liquid to permeate. Then, in the hollow fiber membrane bundle 12, the inside of the hollow fiber membrane 14 is depressurized, and thus the liquid flowing out from the inner pipe openings 11a of the module inner pipe 11 is degasified.

A material, a membrane shape, a membrane form, and the like of the hollow fiber membrane 14 are not particularly limited. Examples of the material of the hollow fiber membrane 14 include polyolefin-based resins such as polypropylene and poly(4-methylpentene-1), silicone-based resins such as polydimethylsiloxane and copolymers thereof, and fluorine-based resins such as PTFE and vinylidene fluoride. Examples of the membrane shape (a side wall shape) of the hollow fiber membrane 14 include a porous membrane, a microporous membrane, and a homogeneous membrane having no porous material (a non-porous membrane). Examples of the membrane form of the hollow fiber membrane 14 include a symmetric membrane (a homogeneous membrane) in which a chemical or physical structure of the entire membrane is homogeneous and an asymmetric membrane (an inhomogeneous membrane) in which chemical or physical structures of the membrane differ depending on a portion of the membrane. The asymmetric membrane (the inhomogeneous membrane) is a membrane having a non-porous dense layer and the porous material. In this case, the dense layer may be formed in any portion of the membrane such as a surface layer portion of the membrane or the inside of the porous membrane. The inhomogeneous membrane also includes a composite film having different chemical structures and a multilayer structure film such as a three-layer structure.

The hollow fiber membrane bundle 12 can be formed, for example, by a woven fabric (not shown) in which the plurality of hollow fiber membranes 14 which are weft threads are woven with warp threads. This woven fabric is also called a hollow fiber membrane sheet, and the plurality of hollow fiber membranes 14 are woven in a bamboo blind shape. This woven fabric is constituted by, for example, 30 to 90 hollow fiber membranes 14 per inch. Then, it is possible to configure the hollow fiber membrane bundle 12 in a circular cylindrical shape by winding the woven fabric around the module inner pipe 11 (the periphery of the liquid supply path) such that the plurality of hollow fiber membranes 14 extend in an axial direction of the module inner pipe 11 (the liquid supply path 10).

The module container 13 is a container that houses the hollow fiber membrane bundle 12. A region between the module inner pipe 11 and the module container 13 is a degasification region A in which the liquid is degasified by the hollow fiber membrane bundle 12. The module container 13 is formed, for example, in a circular cylindrical shape extending in the axial direction of the module inner pipe 11 (the liquid supply path 10), and both ends thereof are open. A plurality of discharge ports 13a are formed in the module container 13. The discharge ports 13a are for discharging the liquid that has passed through the hollow fiber membrane bundle 12 in the degasification region A from the module container 13 (the degasification module 5). The number, the positions, the sizes, and the like of the discharge ports 13a are not particularly limited.

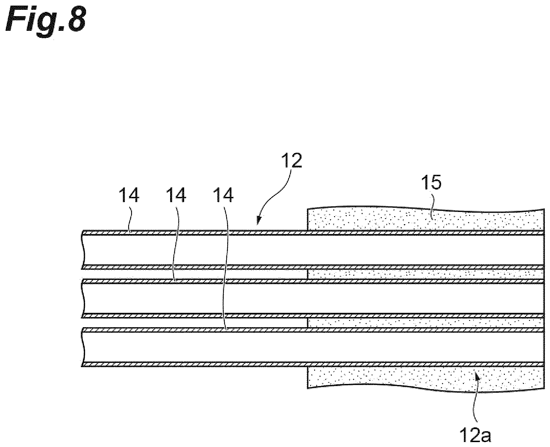

As shown in FIG 8, end portions 12a on both sides of the hollow fiber membrane bundle 12 are fixed to the module inner pipe 11 and the module container 13 by a sealing portion 15.

The sealing portion 15 is formed of, for example, a resin. Examples of the resin used for the sealing portion 15 include an epoxy resin, a urethane resin, an ultraviolet curable resin, and a polyolefin resin such as polyethylene and polypropylene. The sealing portion 15 fills the entire region between the module inner pipe 11 and the module container 13 except for the inside of the hollow fiber membrane 14. That is, the sealing portion 15 fills a portion between the hollow fiber membranes 14, a portion between the hollow fiber membrane bundle 12 and the module inner pipe 11, and a portion between the hollow fiber membranes 14 and the module container 13, but does not fill the inside of the hollow fiber membrane 14. Therefore, the inside of the hollow fiber membrane 14 is open from the sealing portion 15 to both end sides of the degasification module 5, and it is possible to suction the inside of the hollow fiber membrane 14 from both end sides of the degasification module 5. That is, openings at both ends of the module container 13 are suction openings that open or expose the inside of the hollow fiber membrane 14 to allow suctioning and depressurizing of the inside of the hollow fiber membrane 14.

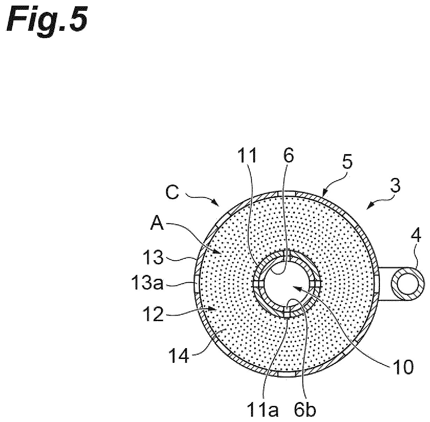

As shown in FIGS. 3 and 5, the degasification unit 2A constituted by the plurality of degasification modules 5 being connected to each other has, for example, a connection supply pipe 6A that connects the liquid supply paths 10 of the plurality of degasification modules 5 in series. The connection supply pipe 6A is one long pipe connected to the plurality of degasification modules 5, and the liquid supply paths 10 of the plurality of degasification modules 5 are formed on an inner peripheral side thereof. Therefore, the plurality of degasification modules 5 are connected in series by the connection supply pipe 6A in appearance. The number of degasification modules 5 constituting the degasification unit 2A is not particularly limited, but will be described below as an example in which four degasification modules 5 are connected. The four degasification modules 5 are referred to as a degasification module 5A, a degasification module 5B, a degasification module 5C, and a degasification module 5D in the order of a flow direction of the liquid in the connection supply pipe 6A. The degasification module 5A is a degasification module 5 which is disposed on the furthest upstream side, and the degasification module 5D is a degasification module 5 which is disposed on the furthest downstream side. The degasification unit 2A is erected in the vertical direction, for example, such that the liquid flows from the bottom to the top in the connection supply pipe 6A. In this case, the degasification module 5A which is disposed on the furthest upstream side is disposed on the lowermost side, and the degasification module 5D which is disposed on the furthest downstream side is disposed on the uppermost side.

A supply port 6a through which the liquid is supplied to the connection supply pipe 6A is formed at an upstream end of the connection supply pipe 6A. A downstream end of the connection supply pipe 6A is sealed. The inner peripheral side of the connection supply pipe 6A forming the liquid supply paths 10 of the plurality of degasification modules 5 is penetrated from an upstream side to a downstream side. Therefore, on the inner peripheral side of the connection supply pipe 6A (the module inner pipe 11 of each degasification module 5), a member that becomes a resistance to the flow of the liquid may be disposed, but a member that seals the connection supply pipe 6A to block the flow of the liquid is not disposed. Then, the liquid supplied from the supply port 6a is supplied to the liquid supply paths 10 of the plurality of degasification modules 5 in series by the connection supply pipe 6A.

In the connection supply pipe 6A, openings 6b through which the liquid passes are formed at positions corresponding to the plurality of degasification modules 5 such that the liquid is supplied to the hollow fiber membrane bundles 12 of the plurality of degasification modules 5 in parallel. Therefore, the liquid supplied to the supply port 6a of the connection supply pipe 6A is supplied (flows out) to the degasification region A of each degasification module 5 from the openings 6b formed at a position corresponding to each degasification module 5. Accordingly, the liquid is supplied to the hollow fiber membrane bundles 12 of the plurality of degasification modules 5 in parallel.

Each degasification module 5 and the connection supply pipe 6A may be in close contact with each other or may be separated from each other. In a case in which each degasification module 5 and the connection supply pipe 6A are in close contact with each other, the inner pipe openings 11a of each degasification module 5 and the openings 6b of the connection supply pipe 6A are formed at positions where they overlap at least in part, and thus it is possible to supply the liquid from the connection supply pipe 6A to the degasification region A of each degasification module 5. On the other hand, in a case in which each degasification module 5 and the connection supply pipe 6A are separated from each other, a flow path through which the liquid flows is formed in a space therebetween, and thus it is possible to supply the liquid from the connection supply pipe 6A to the degasification region A of each degasification module 5 regardless of a positional relationship between the inner pipe openings 11a of each degasification module 5 and the openings 6b of the connection supply pipe 6A.

As shown in FIGS. 4 and 5, the degasification unit 2B constituted by one degasification module 5 has, for example, a connection supply pipe 6B that is inserted into the module inner pipe 11 of the degasification module 5 to form the liquid supply path 10 of the degasification module 5 on the inner peripheral side thereof.

A supply port 6a through which the liquid is supplied to the connection supply pipe 6B is formed at an upstream end of the connection supply pipe 6B. A downstream end of the connection supply pipe 6B is sealed. The inner peripheral side of the connection supply pipe 6B forming the liquid supply path 10 of the degasification module 5 is penetrated from an upstream side to a downstream side. Therefore, on the inner peripheral side of the connection supply pipe 6B (the module inner pipe 11 of the degasification module 5), a member that becomes a resistance to the flow of the liquid may be disposed, but a member that seals the connection supply pipe 6B to block the flow of the liquid is not disposed. Then, the liquid supplied from the supply port 6a is supplied to the liquid supply path 10 of the degasification module 5 by the connection supply pipe 6B.

In the connection supply pipe 6B, openings 6b through which the liquid passes are formed such that the liquid is supplied to the hollow fiber membrane bundle 12 of the degasification module 5. Therefore, the liquid supplied to the supply port 6a of the connection supply pipe 6B is supplied (flows out) to the degasification region A of the degasification module 5 from the openings 6b. Accordingly, the liquid is supplied to the hollow fiber membrane bundle 12 of the degasification module 5.

The degasification module 5 and the connection supply pipe 6B may be in close contact with each other or may be separated from each other. In a case in which the degasification module 5 and the connection supply pipe 6B are in close contact with each other, the inner pipe openings 11a of the degasification module 5 and the openings 6b of the connection supply pipe 6B are formed at positions where they overlap at least in part, and thus it is possible to supply the liquid from the connection supply pipe 6B to the degasification region A of the degasification module 5. On the other hand, in a case in which the degasification module 5 and the connection supply pipe 6B are separated from each other, a flow path through which the liquid flows is formed in a space therebetween, and thus it is possible to supply the liquid from the connection supply pipe 6B to the degasification region A of the degasification module 5 regardless of a positional relationship between the inner pipe openings 11a of the degasification module 5 and the openings 6b of the connection supply pipe 6B.

Unless otherwise specified, the connection supply pipe 6A and the connection supply pipe 6B are collectively referred to as a connection supply pipe 6. Further, the degasification unit 2B may not be provided with the connection supply pipe 6B, and the module inner pipe 11 may also serve as the connection supply pipe 6B. In this case, for example, a supply port through the liquid is supplied to the module inner pipe 11 is formed at the upstream end of the module inner pipe 11, and the downstream end of the module inner pipe 11 is sealed.

### [Housing]

As shown in FIGS. 1 to 5, the housing 3 is formed in a cylindrical shape. The housing 3 houses a plurality of degasification units 2 in parallel such that the plurality of degasification units 2 are disposed in parallel with a central axis L of the housing 3.

An inlet 3a is formed, for example, at a lower end portion of the housing 3. The inlet 3a communicates with the supply port 6a of each degasification unit 2. Therefore, the liquid supplied from the inlet 3a is supplied to the liquid supply path 10 of each degasification unit 2 from the supply port 6a of each degasification unit 2.

An outlet 3b is formed, for example, at an upper end portion of the housing 3. The outlet 3b communicates with the discharge ports 13a of each degasification unit 2. Therefore, the liquid discharged from the discharge ports 13a of each degasification unit 2 is discharged from the outlet 3b of the housing 3.

The housing 3 is provided with a housing sealing portion (a sealing portion) 7 and a degasification unit supporting portion 8.

The housing sealing portion 7 fixes an upstream end portion (a lower end portion) of the connection supply pipe 6 (the connection supply pipe 6A or the connection supply pipe 6B) to an inner peripheral surface of the housing 3. Further, the housing sealing portion 7 partitions an internal space of the housing 3 into an upstream side region B on the inlet 3a side and a downstream side region C on the outlet 3b side via the plurality of degasification units 2. As the housing sealing portion 7, for example, a resin lined with a metal such as stainless steel, a fiber reinforced plastic (FRP), or a metal such as iron is used.

The housing sealing portion 7 fills the entire region between the connection supply pipe 6 and the housing 3 except for the inside of the connection supply pipe 6. That is, the housing sealing portion 7 fills a portion between the connection supply pipe 6 and the housing 3, but does not fill the inside of the connection supply pipe 6. Therefore, the inside of the connection supply pipe 6 is opened from the supply port 6a to the upstream side region B. The liquid supplied from the inlet 3a to the upstream side region B is supplied to the inside of the connection supply pipe 6 from only the supply port 6a and is further supplied to the degasification region A of the degasification module 5 from the openings 6b and the inner pipe openings 11a.

Further, the housing sealing portion 7 is disposed on the upstream side of all the discharge ports 13a in the flow direction of the liquid flowing through the connection supply pipe 6. Therefore, the inside of the module container 13 is opened from the discharge ports 13a to the downstream side region C. The liquid supplied from the openings 6b and the inner pipe openings 11a to the degasification region A is discharged to the downstream side region C from only the discharge ports 13a and is further discharged to the outside of the housing 3 from the outlet 3b.

The degasification unit supporting portion 8 is fixed to a downstream end portion (an upper end portion) of the degasification unit 2 and the housing 3 and supports the downstream end portion of the degasification unit 2. The degasification unit supporting portion 8 is formed, for example, in a rod shape extending from the degasification unit 2 to the housing 3 and does not seal a portion between the degasification unit 2 and the housing 3. Therefore, the liquid discharged from the discharge ports 13a to the downstream side region C is discharged from the outlet 3b to the outside of the housing 3 without being blocked by the degasification unit supporting portion 8.

The inner diameter of the housing 3 is not particularly limited, but is preferably 400 mm or more and 1800 mm or less, more preferably 600 mm or more and 1650 mm or less, and further preferably 470 mm or more and 800 mm or less, for example.

The diameter of the degasification unit 2 is not particularly limited, but is preferably 114 mm or more and 318 mm or less, more preferably 125 mm or more and 216 mm or less, and further preferably 160 mm or more and 170 mm or less, for example. The diameter of the degasification unit 2 refers to the diameter of the module container 13.

The number of degasification units 2 housed in the housing 3 is not particularly limited, but from the viewpoint of being able to ensure an installability of the degasification system 1 and to increase the flow rate, is preferably 50 or more and 200 or less, more preferably 76 or more and 180 or less, and further preferably 150 or more and 160 or less, for example.

The flow rate of the liquid which is supplied to the housing 3 is not particularly limited, but from the viewpoint of being able to improve degasification efficiency of the degasification unit 2, is preferably 150 m³/h or more and 1200 m³/h or less, more preferably 200 m³/h or more and 1000 m³/h or more, and further preferably 450 m³/h or more and 960 m³/h or less, for example.

The ideal retention time of the liquid in the housing 3 is not particularly limited, but from the viewpoint of being able to increase the flow rate while preventing the housing 3 from becoming too large, is preferably 7 seconds or more and 35 seconds or less, more preferably 17 seconds or more and 28 seconds or less, and further preferably 20 seconds or more and 22 seconds or less, for example. The ideal retention time of the liquid in the housing 3 refers to a value (V/Q) obtained by dividing the volume Vm³ of the housing 3 by the flow rate Qm³/h of the liquid.

The ideal retention time of the liquid in the upstream side region B is not particularly limited, but from the viewpoint of appropriately supplying the liquid to each degasification unit 2 while preventing the degasification system 1 from becoming too large, is preferably 3 seconds or more and 12 seconds or less, more preferably 4 seconds or more and 8 seconds or less, and further preferably 5 seconds or more and 6 seconds or less, for example. The ideal retention time of the liquid in the upstream side region B refers to a value (V/Q) obtained by dividing the volume Vm³ of the upstream side region B by the flow rate Qm³/h of the liquid.

### [Suction pipe]

The suction pipe 4 communicates with the inside of the hollow fiber membrane 14 to suction (to vacuum-evacuate) the inside of the hollow fiber membrane 14. Further, the suction pipe 4 penetrates the housing 3 and extends to the outside of the housing 3 for the suction by a suction pump such as a vacuum pump provided outside the housing 3. As described above, the inside of the hollow fiber membrane 14 is opened from the sealing portion 15 to both end sides of the degasification module 5. Therefore, the suction pipe 4 is connected to both ends of the degasification module 5 to which the inside of the hollow fiber membrane 14 is opened. Accordingly, it is possible to suction the inside of the hollow fiber membrane 14 from both end sides of the degasification module 5 by suctioning the suction pipe 4.

Further, in the degasification unit 2A shown in FIG 3, since the plurality of degasification modules 5 are connected in series by the connection supply pipe 6 in appearance, end faces of the degasification modules on opposite sides are disposed to face each other between the degasification modules 5 adjacent to each other along the connection supply pipe 6. Therefore, one suction pipe 4 may be connected to the facing end faces.

The suction pipe 4 may be provided for each of the plurality of degasification units 2, or may be provided in one for the plurality of degasification units 2. Further, in a case in which one degasification unit 2 is constituted by the plurality of degasification modules 5 as in the degasification unit 2A shown in FIG 3, the suction pipe 4 may be connected to each of the plurality of degasification modules 5, or one suction pipe 4 may be connected to the plurality of degasification modules 5. Further, in the degasification unit 2A shown in FIG 3, since the plurality of degasification modules 5 are connected in series by the connection supply pipe 6 in appearance, end faces of the degasification modules on opposite sides are disposed to face each other between the degasification modules 5 adjacent to each other along the connection supply pipe 6. Therefore, one suction pipe 4 may be connected to the facing end faces.

### [Degasification method]

Next, a liquid degasification method by the degasification system 1 will be described.

First, a liquid such as water is supplied from the inlet 3a of the housing 3 to the upstream side region B of the housing 3. Then, the liquid supplied to the upstream side region B is supplied to the connection supply pipe 6 from the supply port 6a and is supplied to the degasification region A of the degasification module 5 through the openings 6b of the connection supply pipe 6 and the inner pipe openings 11a of the degasification module 5. Accordingly, the liquid is supplied to the hollow fiber membrane bundle 12 of the degasification module 5. In the degasification region A, the liquid supplied from the inner pipe openings 11a passes between the plurality of hollow fiber membranes 14 in the hollow fiber membrane bundle 12 and then is discharged from the discharge ports 13a. At this time, the suction pipe 4 is suctioned, and the inside of the plurality of hollow fiber membranes 14 is depressurized, and thus a dissolved gas, bubbles, and the like of the liquid passing between the plurality of hollow fiber membranes 14 are removed. Then, the degasified liquid is discharged from the discharge ports 13a to the downstream side region C and further discharged from the outlet 3b to the outside of the housing 3.

### [Flow rate analysis]

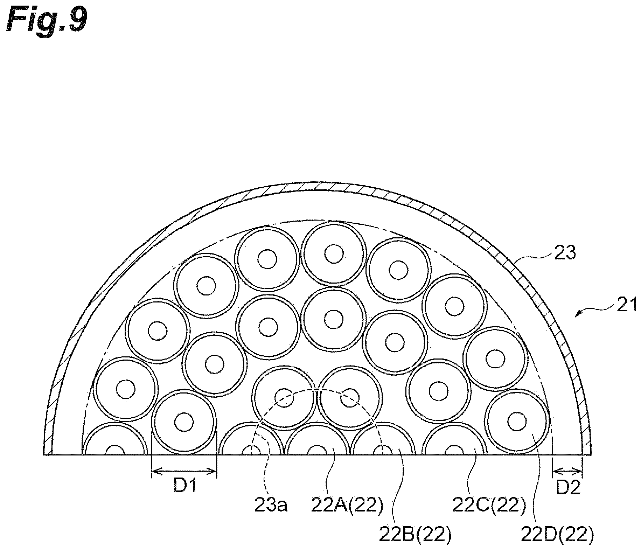

Here, the present inventors analyzed a flow rate of the liquid flowing through each degasification unit 22 for degasification systems 21 of Reference Examples 1 to 8 in which 39 degasification units 22 are housed in parallel in a housing 23 as shown in FIG 9. FIG 9 shows only half of the degasification unit 22. Each degasification unit 22 was set to be constituted by four degasification modules connected to each other as in the degasification unit 2A shown in FIG 3, and all the degasification units 22 were set to be the same.

In the degasification system 21, the plurality of degasification units 22 were disposed in four rows from the central axis of the housing 23 toward the inner peripheral surface side of the housing 23. Specifically, the degasification unit 22 which is disposed on the most central side was designated as a degasification unit 22A in a first row. The degasification unit 22 disposed on the outer peripheral side of the degasification unit 22A in the first row was designated as a degasification unit 22B in a second row. The degasification unit 22 which is disposed on the outer peripheral side of the degasification unit 22B in the second row was designated as a degasification unit 22C in a third row. The degasification unit 22 which is disposed on the outer peripheral side of the degasification unit 22C in the third row and is disposed on the outermost peripheral side was designated as a degasification unit 22D in a fourth row. The degasification unit 22A in the first row is constituted by one degasification unit 22 disposed on the central axis of the housing 23. The degasification unit 22B in the second row is constituted by six degasification units 22 to surround the degasification unit 22A in the first row. The degasification unit 22C in the third row is constituted by 13 degasification units 22 to surround the degasification unit 22B in the second row. The degasification unit 22D in the fourth row is constituted by 19 degasification units 22 to surround the degasification unit 22C in the third row.

As analysis software, ANSYS Fluent Ver. 19.0 was used. For the liquid, seawater was used as a model, and a density thereof was set to 1025.5 kg/m³ and a viscosity thereof was set to 0.001164 Pa·s. For the hollow fiber membrane bundle, a porous material (a flow path having a pressure resistance) was used as a model, and a pressure coefficient thereof was set to 1.9 × 10¹⁰ from an analysis value of one degasification module. In the analysis for obtaining the pressure coefficient, EF-040P manufactured by DIC Corporation was used.

### (Reference Example 1)

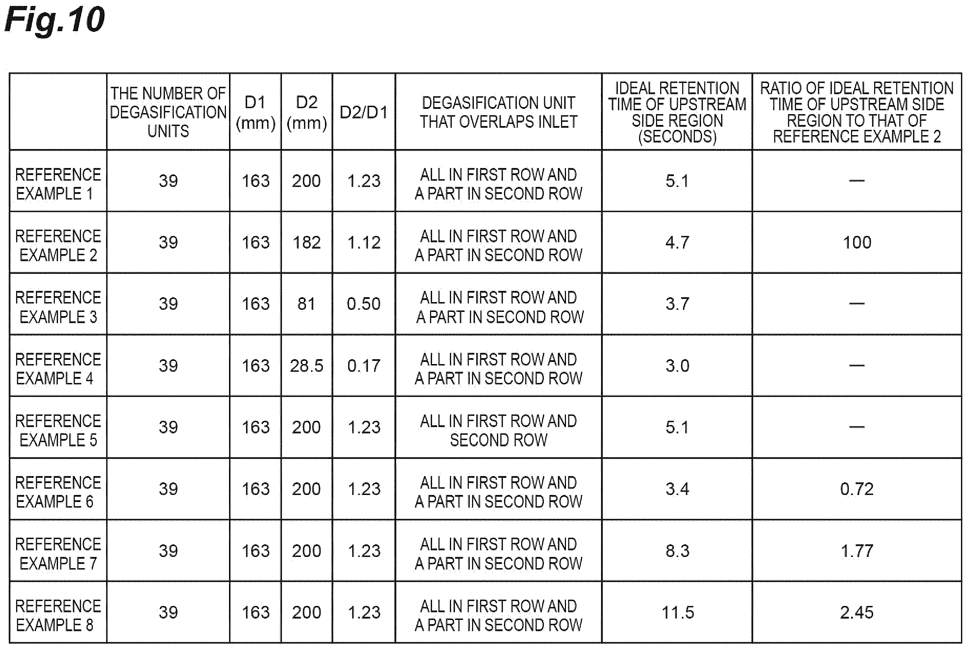

As shown in FIGS. 9 and 10, in the degasification system 21 of Reference Example 1, the inner diameter of the housing 23 was set to 1645 mm, the outer diameter D1 of the degasification unit 22 was set to 163 mm, and the distance D2 from the plurality of degasification units 22 to the inner peripheral surface of the housing 23 was set to 200 mm. The distance D2 from the plurality of degasification units 22 to the inner peripheral surface of the housing 23 refers to the shortest distance from the circumscribed circle of the plurality of degasification units 22 to the inner peripheral surface of the housing 23. The distance D2 is about 1.23 times the outer diameter D1 of the degasification unit 22. In other words, the ratio (D2/D1) of the distance D2 to the outer diameter D1 of the degasification unit 22 is about 1.23. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B (see FIG 1) of the housing 23 was set to 5.1 seconds.

### (Reference Example 2)

As shown in FIGS. 9 and 10, in the degasification system 21 of Reference Example 2, the inner diameter of the housing 23 was set to 1607 mm, the outer diameter D1 of the degasification unit 22 was set to 163 mm, and the distance D2 from the plurality of degasification units 22 to the inner peripheral surface of the housing 23 was set to 182 mm. The distance D2 is about 1.12 times the outer diameter D1 of the degasification unit 22. In other words, the ratio (D2/D1) of the distance D2 to the outer diameter D1 of the degasification unit 22 is about 1.12. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 4.7 seconds.

### (Reference Example 3)

As shown in FIGS. 9 and 10, in the degasification system 21 of Reference Example 3, the inner diameter of the housing 23 was set to 1405 mm, the outer diameter D1 of the degasification unit 22 was set to 163 mm, and the distance D2 from the plurality of degasification units 22 to the inner peripheral surface of the housing 23 was set to 81 mm. The distance D2 is about 0.50 times the outer diameter D1 of the degasification unit 22. In other words, the ratio (D2/D1) of the distance D2 to the outer diameter D1 of the degasification unit 22 is about 0.50. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 3.7 seconds.

### (Reference Example 4)

As shown in FIGS. 9 and 10, in the degasification system 21 of Reference Example 4, the inner diameter of the housing 23 was set to 1270 mm, the outer diameter D1 of the degasification unit 22 was set to 163 mm, and the distance D2 from the plurality of degasification units 22 to the inner peripheral surface of the housing 23 was set to 28.5 mm. The distance D2 is about 0.17 times the outer diameter D1 of the degasification unit 22. In other words, the ratio (D2/D1) of the distance D2 to the outer diameter D1 of the degasification unit 22 is about 0.17. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 3.0 seconds.

### (Reference Example 5)

As shown in FIGS. 9 and 10, in the degasification system 21 of Reference Example 5, the inner diameter of the housing 23 was set to 1645 mm, the outer diameter D1 of the degasification unit 22 was set to 163 mm, and the distance D2 from the plurality of degasification units 22 to the inner peripheral surface of the housing 23 was set to 200 mm. The distance D2 is about 1.23 times the outer diameter D1 of the degasification unit 22. In other words, the ratio (D2/D1) of the distance D2 to the outer diameter D1 of the degasification unit 22 is about 1.23. Further, the diameter of the inlet 3a of the housing 23 was set to 420 mm, and it was set such that all of the degasification unit 22A in the first row and all of the degasification unit 22B in the second row overlap the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 5.1 seconds.

### (Reference Example 6)

As shown in FIGS. 9 and 10, in the degasification system 21 of Reference Example 6, the inner diameter of the housing 23 was set to 1645 mm, the outer diameter D1 of the degasification unit 22 was set to 163 mm, and the distance D2 from the plurality of degasification units 22 to the inner peripheral surface of the housing 23 was set to 200 mm. The distance D2 is about 1.23 times the outer diameter D1 of the degasification unit 22. In other words, the ratio (D2/D1) of the distance D2 to the outer diameter D1 of the degasification unit 22 is about 1.23. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 3.4 seconds. The ideal retention time of the upstream side region B of Reference Example 6 is 0.72 times the ideal retention time of the upstream side region B of Reference Example 2. In other words, the ratio (T6/T2) of the ideal retention time T6 of the upstream side region B of Reference Example 6 to the ideal retention time T2 of the upstream side region B of Reference Example 2 is 0.72.

### (Reference Example 7)

As shown in FIGS. 9 and 10, in the degasification system 21 of Reference Example 7, the inner diameter of the housing 23 was set to 1645 mm, the outer diameter D1 of the degasification unit 22 was set to 163 mm, and the distance D2 from the plurality of degasification units 22 to the inner peripheral surface of the housing 23 was set to 200 mm. The distance D2 is about 1.23 times the outer diameter D1 of the degasification unit 22. In other words, the ratio (D2/D1) of the distance D2 to the outer diameter D1 of the degasification unit 22 is about 1.23. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 8.3 seconds. The ideal retention time of the upstream side region B of Reference Example 7 is 1.77 times the ideal retention time of the upstream side region B of Reference Example 2. In other words, the ratio (T7/T2) of the ideal retention time T7 of the upstream side region B of Reference Example 7 to the ideal retention time T2 of the upstream side region B of Reference Example 2 is 1.77.

### (Reference Example 8)

As shown in FIGS. 9 and 10, in the degasification system 21 of Reference Example 8, the inner diameter of the housing 23 was set to 1645 mm, the outer diameter D1 of the degasification unit 22 was set to 163 mm, and the distance D2 from the plurality of degasification units 22 to the inner peripheral surface of the housing 23 was set to 200 mm. The distance D2 is about 1.23 times the outer diameter D1 of the degasification unit 22. In other words, the ratio (D2/D1) of the distance D2 to the outer diameter D1 of the degasification unit 22 is about 1.23. Further, the diameter of the inlet 3a of the housing 23 was set to 350 mm, and it was set such that all of the degasification unit 22A in the first row overlaps the inlet 3a, a part of the degasification unit 22B in the second row overlaps the inlet 3a, and the degasification unit 22C in the third row and the degasification unit 22D in the fourth row do not overlap the inlet 3a at all, when seen in a direction along the central axis of the housing 23. Further, the total flow rate of the liquid which is supplied to the degasification system 21 was set to 663 m³/h, and the ideal retention time of the liquid in the upstream side region B of the housing 23 was set to 11.5 seconds. The ideal retention time of the upstream side region B of Reference Example 8 is 2.45 times the ideal retention time of the upstream side region B of Reference Example 2. In other words, the ratio (T8/T2) of the ideal retention time T8 of the upstream side region B of Reference Example 8 to the ideal retention time T2 of the upstream side region B of Reference Example 2 is 2.45.

### (Analysis results and examinations)

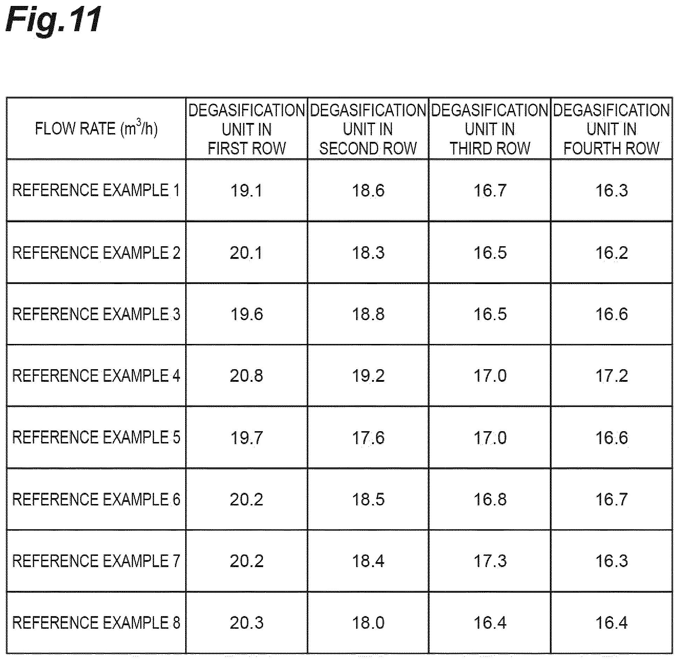

The flow rates of the degasification units 22 in each row in Reference Examples 1 to 8 are shown in FIG 11. As the flow rate of the degasification unit 22B in the second row, the flow rate of the degasification unit 22C in the third row, and the flow rate of the degasification unit 22D in the fourth row, an average value of the flow rates of all the degasification units 22 disposed in each row was used.

### (Examination 1)

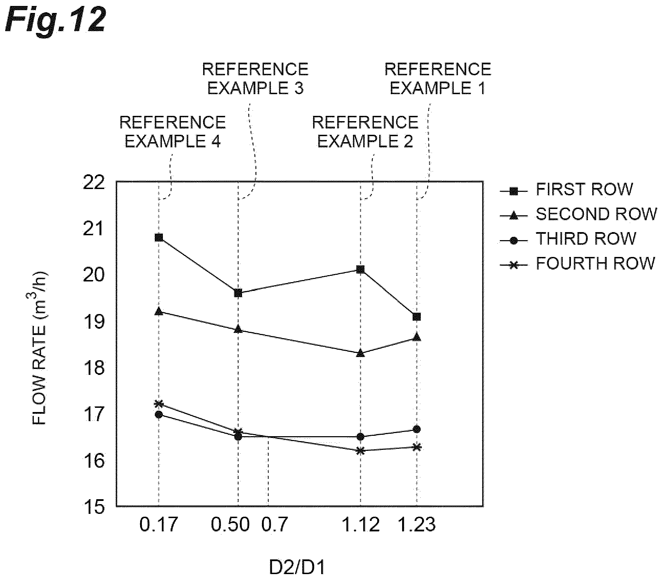

FIG 12 is a graph showing the relationship between the flow rates of the degasification units 22 in each row and the ratio (D2/D1) of the distance D2 to the outer diameter D1 of the degasification unit 22 in Reference Examples 1 to 4. As shown in FIG 12, as a whole, the flow rate of the degasification unit 22 tends to increase as the degasification unit 22 is close to the central axis of the housing 23, and the flow rate of the degasification unit 22 tends to decrease as the degasification unit 22 becomes further away from the central axis of the housing 23.

Therefore, it is assumed that by increasing a pressure loss of the liquid flowing through the degasification unit 22 as the degasification unit 22 is close to the central axis of the housing 23, it is possible to reduce deviation in the flow rate of the liquid flowing through each degasification unit 22.

On the other hand, in Reference Examples 3 and 4, the magnitude relationship between the flow rate of the degasification unit 22C in the third row and the flow rate of the degasification unit 22D in the fourth row is reversed. That is, in Reference Examples 3 and 4, the flow rate of the degasification unit 22D in the fourth row is larger than the flow rate of the degasification unit 22C in the third row. From a line connecting the flow rates of the degasification units 22 in each row in Reference Examples 1 to 4, it can be seen that the magnitude relationship between the flow rate of the degasification unit 22C in the third row and the flow rate of the degasification unit 22D in the fourth row is reversed at a point where the ratio (D2/D1) of the distance D2 to the outer diameter D1 of the degasification unit 22 is 0.7.

From this result, it was found that the flow rate of the liquid flowing through the degasification unit 22 tends to decrease as the degasification unit 22 becomes further away from the central axis of the housing 23, but the above tendency is reversed in an outer region from the inner peripheral surface of the housing 23 to a position corresponding to 0.7 times or 0.5 times the outer diameter D1 of the degasification unit 22 toward the central axis side. That is, it was found that the flow rate of the liquid flowing through the degasification unit 22 tends to be higher in the outer region than in an inner region. Further, it was found that in the outer region, the flow rate of the liquid flowing through the degasification unit 22 tends to increase as the degasification unit 22 becomes further away from the central axis of the housing 23 (as the degasification unit 22 is close to the inner peripheral surface of the housing 23). It is assumed that this is because, in the outer region, the liquid flowing in the housing 23 is pushed back against the inner peripheral surface of the housing 23, and thus the flow rate of the liquid flowing through the degasification unit 22 increases.

Therefore, it is assumed that by making the pressure loss of the liquid in the degasification unit 2 disposed in the outer region 16 larger than that in the degasification unit 2 closest to the outer region 16 among the degasification units 2 disposed in the inner region 17, it is possible to reduce deviation in the flow rate of the liquid flowing through each degasification unit 22. Further, it is assumed that in the outer region, by increasing the pressure loss of the liquid flowing through the degasification unit 22 as the degasification unit 22 becomes further away from the central axis of the housing 23, it is possible to reduce deviation in the flow rate of the liquid flowing through each degasification unit 22.

### (Examination 2)

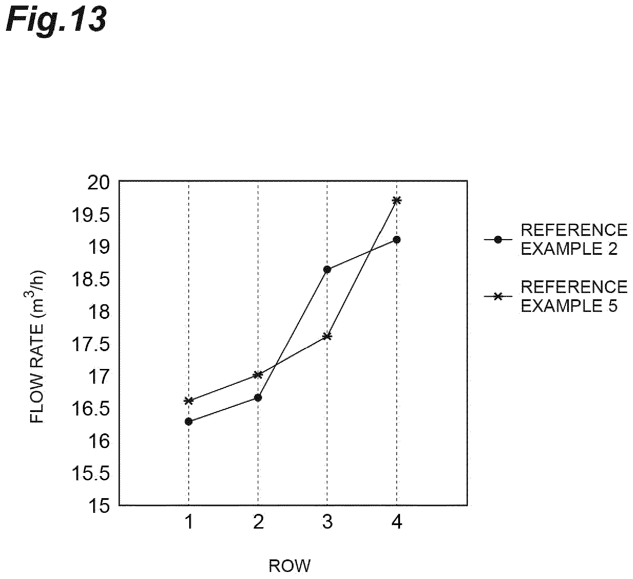

FIG 13 is a graph showing the relationship between each row and the flow rates of degasification units 22 in Reference Examples 2 and 5. As shown in FIG 10, in Reference Example 2 and Reference Example 5, the degree of overlap between the degasification unit 22 and the inlet 3a when seen in a direction along the central axis of the housing 23 is different. However, as shown in FIG 13, in both Reference Example 2 and Reference Example 5, the tendency that the flow rate of the degasification unit 22 that overlaps the inlet 3a when seen in a direction along the central axis of the housing 23 is larger than that of the degasification unit 22 that does not overlap the inlet 3a when seen in a direction along the central axis of the housing 23 does not change.

From this result, it was found that the flow rate of the degasification unit 22 that overlaps the inlet 3a when seen in a direction along the central axis of the housing 23 is larger than that of the degasification unit 22 that does not overlap the inlet 3a when seen in a direction along the central axis of the housing 23 regardless of the difference in the degree of overlap between the degasification unit 22 and the inlet 3a when seen in a direction along the central axis of the housing 23.

Therefore, it is assumed that by making the pressure loss of the liquid in the degasification unit 22 that overlaps the inlet 3a when seen in a direction along the central axis of the housing 23 larger than that in the degasification unit 22 that does not overlap the inlet 3a when seen in a direction along the central axis of the housing 23 regardless of the difference in the degree of overlap between the degasification unit 22 and the inlet 3a when seen in a direction along the central axis of the housing 23, it is possible to reduce deviation in the flow rate of the liquid flowing through each degasification unit 22.

### (Examination 3)

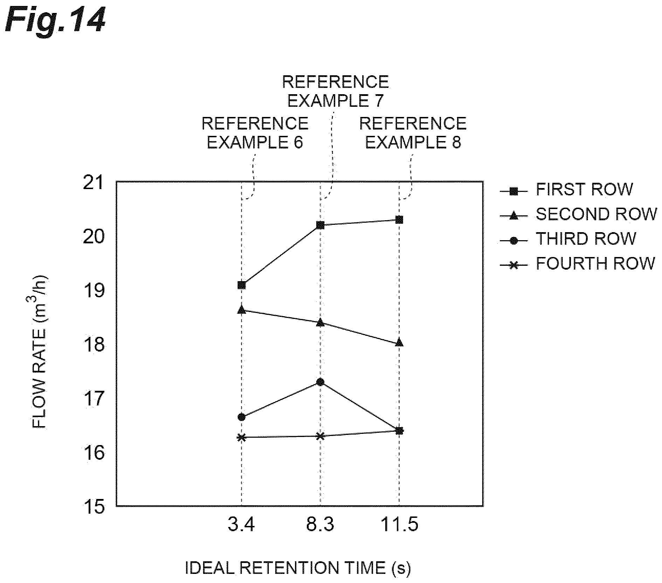

FIG 14 is a graph showing the relationship between the flow rates of degasification units 22 in each row and the ideal retention time of the upstream side region B of the housing 23 in Reference Examples 6 to 8. As shown in FIG 14, in Reference Examples 6 to 8, the ideal retention time of the upstream side region B of the housing 23 is different. However, in all of Reference Examples 6 to 8, the tendency that the flow rate of the liquid flowing through the degasification unit 22 increases as the degasification unit 22 is close to the central axis of the housing 23 does not change.

From this result, it was found that the flow rate of the liquid flowing through the degasification unit 22 increases as the degasification unit 22 is close to the central axis of the housing 23 regardless of the difference in the ideal retention time of the upstream side region B of the housing 23.

Therefore, it is assumed that by increasing the pressure loss of the liquid flowing through the degasification unit 22 as the degasification unit 22 is close to the central axis of the housing 23 regardless of the difference in the ideal retention time of the upstream side region B, it is possible to reduce deviation in the flow rate of the liquid flowing through each degasification unit 22.

### [Pressure loss of each degasification unit]

In view of the analysis results and examinations of the above reference example, in the present embodiment, the plurality of degasification units 2 are configured such that the pressure losses of the liquid differ depending on the distance from the central axis L of the housing 3, and thus the deviation in the flow rate of the liquid flowing through each degasification unit 22 is reduced, and the degasification performance of the degasification system 1 in its entirety is improved.

Specifically, among the plurality of degasification units 2, the degasification unit 2 that overlaps the inlet 3a when seen in a direction along the central axis L may be configured such that the pressure loss of the liquid therein is larger than that in the degasification unit 2 that does not overlap the inlet 3a when seen in a direction along the central axis L of the housing 23 (see Reference Examples 2 and 5 and FIG 13). In the present specification, the pressure loss refers to a pressure loss of the liquid flowing through the degasification unit 2.

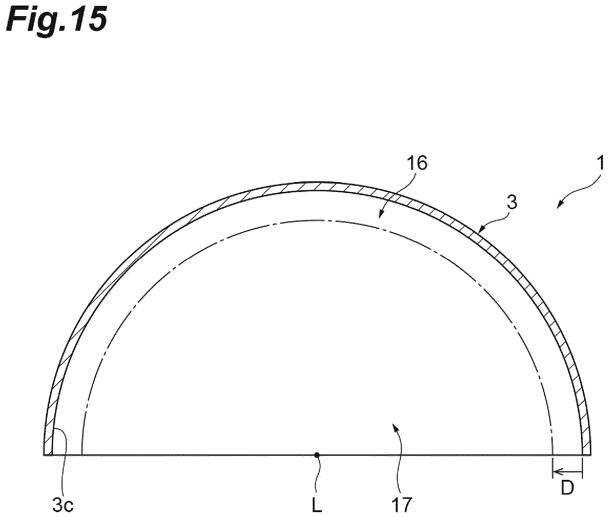

Here, as shown in FIG 15, a region from the inner peripheral surface 3c of the housing 3 to a position of a predetermined distance D toward the central axis L side is defined as the outer region 16, and a region inside the outer region 16 is defined as the inner region 17. This predetermined distance D is a distance at which the magnitude relationship of the flow rates of the degasification units 2 is reversed in a case in which the pressure losses of the plurality of degasification units 2 are the same. From the above Examination 1, the predetermined distance may be 0.7 times the outer diameter D1 of the degasification unit 2 or 0.5 times the outer diameter D1 of the degasification unit 2.

In this case, in the inner region 17, the plurality of degasification units 2 have an inner degasification unit which is an arbitrary one degasification unit 2 and an outer degasification unit which is a degasification unit 2 farther from the central axis L than the inner degasification unit and the inner degasification unit may be configured such that the pressure loss of the liquid therein is larger than that in the outer degasification unit (see Reference Examples 1 to 4 and FIG 12). For example, in a case in which all the degasification modules are disposed in the inner region 17 and the degasification unit 2A in the first row is set as an inner degasification module, any of the degasification unit 2B in the second row, the degasification unit 2C in the third row, and the degasification unit 2D in the fourth row serves as the outer degasification module. In the inner region 17, it is sufficient that the pressure losses of any two degasification units 2 among the plurality of degasification units 2 satisfy the above relationship. For example, the pressure losses of the degasification units 2 adjacent to each other in a radial direction of the housing 3 may be the same (substantially the same). The fact that the pressure losses are the same means that it also includes a case in which the pressure losses differ by, for example, about 30% due to a manufacturing error or the like.

Further, in a case in which all the degasification units 2 are disposed in the inner region 17, the plurality of degasification units 2 may be configured such that the pressure loss of the liquid increases as the degasification unit 2 becomes closer to the central axis L.

On the other hand, in a case in which at least one degasification unit 2 is disposed in the outer region 16 and the remaining degasification units 2 are disposed in the inner region 17, the degasification units 2 disposed in the inner region 17 may be configured such that the pressure loss of the liquid increases as the degasification unit 2 becomes closer to the central axis L. In this case, the degasification unit 2 disposed in the outer region 16 may be configured such that the pressure loss of the liquid therein is larger than that in the degasification unit 2 closest to the outer region 16 among the degasification units 2 disposed in the inner region 17. Further, the degasification units 2 disposed in the outer region 16 may be configured such that the pressure loss of the liquid increases as the degasification unit 2 becomes further away from the central axis L of the housing 23.

It is possible to obtain the pressure loss of the liquid flowing through the degasification unit 2, for example, by measuring the pressure of the liquid in the supply port 6a (see FIGS. 3 and 4) and the pressure of the liquid in each of the discharge ports 13a (see FIGS. 3 and 4) of the degasification unit 2 with a pressure gauge or the like and calculating the difference therebetween.

Here, the pressure loss of the liquid in each degasification unit 2 is the sum of, for example, [1] a pressure loss of the liquid in the liquid supply path 10 (the connection supply pipe 6), [2] a pressure loss of the liquid in the openings 6b of the connection supply pipe 6, [3] a pressure loss of the liquid in the inner pipe openings 11a of the module inner pipe 11, [4] a pressure loss of the liquid in the hollow fiber membrane bundle 12, and [5] a pressure loss of the liquid in the discharge ports 13a of the module container 13. Therefore, for example, by adjusting a part or all of them, that is, by adjusting at least one of them, it is possible to adjust the pressure loss of the liquid in each degasification unit 2.
[1] For example, by reducing the inner diameter of the connection supply pipe 6, it is possible to increase the pressure loss of the liquid in the liquid supply path 10. In this case, for example, as the connection supply pipe 6, a pipe having an inner diameter that narrows in a tapered shape from the upstream side toward the downstream side or a pipe having an inner diameter that gradually narrows from the upstream side toward the downstream side may be used, and thus the inner diameter of the connection supply pipe 6 may be reduced.
[2] For example, by reducing the total area of the openings 6b of the connection supply pipe 6, reducing the number of openings 6b of the connection supply pipe 6, or reducing the size of each of the openings 6b of the connection supply pipe 6, it is possible to increase the pressure loss of the liquid at the openings 6b of the connection supply pipe 6.
[3] For example, by reducing the total area of the inner pipe openings 11a of the degasification module 5, reducing the number of the inner pipe openings 11a of the degasification module 5, or reducing the size of each of the inner pipe openings 11a of the degasification module 5, it is possible to increase the pressure loss of the liquid at the inner pipe openings 11a of the module inner pipe 11.
[4] For example, by making the density of the plurality of hollow fiber membranes 14 in the degasification module 5 high, it is possible to increase the pressure loss of the liquid in the hollow fiber membrane bundle 12. Specifically, when the density of the plurality of hollow fiber membranes 14 is made high, a gap between the plurality of hollow fiber membranes 14 is narrowed, and the passage resistance of the liquid to the hollow fiber membrane bundle 12 is increased. As a result, the pressure loss of the liquid in the hollow fiber membrane bundle 12 becomes large.

Further, for example, by increasing the thickness of the hollow fiber membrane bundle 12 in the degasification module 5, it is possible to increase the pressure loss of the liquid in the hollow fiber membrane bundle 12. Specifically, when the thickness of the hollow fiber membrane bundle 12 is made thick, the passage resistance of the liquid to the hollow fiber membrane bundle 12 is increased. As a result, the pressure loss of the liquid in the hollow fiber membrane bundle 12 becomes large.

Further, in a case in which the hollow fiber membrane bundle 12 is formed by a woven fabric obtained by weaving the plurality of hollow fiber membranes 14, which are weft threads, with warp threads being wound around the module inner pipe 11 (the periphery of the liquid supply path 10), for example, by making the winding pressure of the woven fabric in the degasification module 5 high, it is possible to increase the pressure loss of the liquid in the hollow fiber membrane bundle 12. Specifically, when the winding pressure of the wound woven fabric is made high, a gap between the plurality of hollow fiber membranes 14 is narrowed, and the passage resistance of the liquid to the hollow fiber membrane bundle 12 is increased. As a result, the pressure loss of the liquid in the hollow fiber membrane bundle 12 becomes large. In this case, the woven fabric may be wound around the module inner pipe 11 (the periphery of the liquid supply path 10) such that the plurality of hollow fiber membranes 14 extend in the axial direction of the module inner pipe 11 (the liquid supply path 10).

Similarly, in a case in which the hollow fiber membrane bundle 12 is formed by a woven fabric obtained by weaving the plurality of hollow fiber membranes 14, which are weft threads, with warp threads being wound around the module inner pipe 11 (the periphery of the liquid supply path 10) such that the plurality of hollow fiber membranes 14 extend in the axial direction of the module inner pipe 11 (the liquid supply path 10), for example, by making a pitch between the warp threads in the degasification module 5 long, it is possible to increase the pressure loss of the liquid in the hollow fiber membrane bundle 12. Specifically, when the woven fabric is wound around the module inner pipe 11, the hollow fiber membrane 14 on the outer peripheral side tends to enter between the adjacent hollow fiber membranes 14 on the inner peripheral side. In this case, if the pitch between the warp threads in the degasification module 5 is short, a gap between the hollow fiber membranes on the inner peripheral side which are supported by the warp threads is narrowed, and thus the hollow fiber membrane 14 on the outer peripheral side is difficult to enter between the adjacent hollow fiber membranes 14 on the inner peripheral side. As a result, the density of the hollow fiber membranes 14 becomes low. As a result, the pressure loss of the liquid in the hollow fiber membrane bundle 12 becomes small. On the other hand, if the pitch between the warp threads in the degasification module 5 is long, a gap between the hollow fiber membranes on the inner peripheral side which are supported by the warp threads is lengthened, and thus the hollow fiber membrane 14 on the outer peripheral side easily enters between the adjacent hollow fiber membranes 14 on the inner peripheral side. As a result, the density of the hollow fiber membranes 14 becomes high. As a result, the pressure loss of the liquid in the hollow fiber membrane bundle 12 becomes large.

Further, for example, by increasing the outer diameter of the hollow fiber membrane 14 in the degasification module 5, it is possible to increase the pressure loss of the liquid in the hollow fiber membrane bundle 12. Specifically, for example, in a case in which the number of the hollow fiber membranes 14 is the same, when the outer diameter of the hollow fiber membrane 14 is made large, a gap between the hollow fiber membranes 14 is narrowed, and the passage resistance of the liquid to the hollow fiber membrane bundle 12 is increased. As a result, the pressure loss of the liquid in the hollow fiber membrane bundle 12 becomes large.

Further, for example, by making the hydrophilicity of the hollow fiber membrane 14 in the degasification module 5 high, it is possible to increase the pressure loss of the liquid in the hollow fiber membrane bundle 12. Specifically, when the hydrophilicity of the hollow fiber membrane 14 is made high, the contact resistance of the liquid to the hollow fiber membrane 14 is increased. As a result, the pressure loss of the liquid in the hollow fiber membrane bundle 12 becomes large.

[5] For example, by reducing the total area of the discharge ports 13a of the degasification module 5, reducing the number of the discharge ports 13a of the degasification module 5, or reducing the size of each of the discharge ports 13a of the degasification module 5, it is possible to increase the pressure loss of the liquid at the discharge ports 13a of the module container 13.

As described above, in the degasification system 1 according to the present embodiment, the plurality of degasification units 2 are housed in parallel in the cylindrical housing 3. Here, in a case in which the pressure losses of the liquid flowing through the plurality of degasification units 2 are the same, the flow rates of the liquid flowing through the degasification units 2 differ depending on the distance from the central axis L of the housing 3. However, in this degasification system 1, the plurality of degasification units 2 are configured such that the pressure losses of the liquid differ depending on the distance from the central axis L of the housing 3. This difference in the pressure loss acts to offset the above difference in the flow rate. As a result, it is possible to reduce the deviation in the flow rate of the liquid flowing through the plurality of degasification units 2. As a result, for example, the degasification performance of the degasification system 1 in its entirety can be improved.

Further, by providing the suction pipe 4, it is possible to appropriately degasify the liquid in the degasification unit 2, and it is possible to appropriately discharge the degasification gas to the outside of the housing 3.

Since the degasification unit 2 that overlaps the inlet 3a when seen in a direction along the central axis L receives a stronger supply pressure of the liquid from the inlet 3a than that in the degasification unit 2 that does not overlap the inlet 3a when seen in a direction along the central axis L, the liquid easily flows in the degasification unit 2 that overlaps the inlet 3a when seen in a direction along the central axis L. Here, since the degasification unit 2 that overlaps the inlet 3a when seen in a direction along the central axis L is configured such that the pressure loss of the liquid therein is larger than that in the degasification unit 2 that does not overlap the inlet 3a when seen in a direction along the central axis L, this difference in the pressure loss acts to offset the difference in the supply pressure of the liquid. As a result, it is possible to reduce the deviation in the flow rate of the liquid flowing through these degasification units 2.

Incidentally, as described above, in a case in which the pressure losses of the liquid flowing through the plurality of degasification units 2 are the same, the flow rate of the liquid flowing through the degasification unit 2 tends to decrease as the degasification unit 2 becomes further away from the central axis L of the housing 3. However, the above tendency is reversed in the outer region from the inner peripheral surface of the housing 3 to the position of the predetermined distance D toward the central axis side.

Therefore, since the inner degasification unit is configured such that the pressure loss of the liquid therein is larger than that in the outer degasification unit, this difference in the pressure loss acts to offset the above difference in the flow rate. As a result, it is possible to reduce the deviation in the flow rate of the liquid flowing through the inner degasification unit and the outer degasification unit.

Further, in a case in which all the degasification units 2 are disposed in the inner region 17, the plurality of degasification units 2 are configured such that the pressure loss of the liquid increases as the degasification unit 2 becomes closer to the central axis L, and thus it is possible to appropriately reduce the deviation in the flow rate of the liquid flowing through the plurality of degasification units 2.

On the other hand, in a case in which at least one degasification unit 2 is disposed in the outer region 16 and the remaining degasification units 2 are disposed in the inner region 17, the degasification units 2 disposed in the inner region 17 are configured such that the pressure loss of the liquid increases as the degasification unit 2 becomes closer to the central axis L, and thus it is possible to appropriately reduce the deviation in the flow rate of the liquid flowing through the degasification units 2 in the inner region 17.

In this case, since the degasification unit 2 disposed in the outer region 16 is configured such that the pressure loss of the liquid therein is larger than that in the degasification unit 2 closest to the outer region 16 among the degasification units 2 disposed in the inner region 17, it is possible to appropriately reduce the deviation in the flow rate of the liquid even between the degasification unit 2 disposed in the inner region 17 and the degasification unit 2 disposed in the outer region 16.

### [Method for manufacturing degasification system]

Next, a method for manufacturing the degasification system 1 will be described.

In a case in which one degasification unit 2 is constituted by a plurality of degasification modules 5 as in the degasification unit 2A shown in FIG 3, first, a plurality of degasification modules 5 and a connection supply pipe 6 are prepared. Next, the connection supply pipe 6 is inserted into the liquid supply paths 10 of the plurality of degasification modules 5. Then, the liquid supply paths 10 of the plurality of degasification modules 5 are connected in series by the connection supply pipe 6. Further, the plurality of openings 6b of the connection supply pipe 6 are disposed at positions corresponding to the plurality of degasification modules 5 such that the liquid is supplied to the hollow fiber membrane bundles 12 of the plurality of degasification modules 5 in parallel. As a result, one degasification unit 2 is formed. In a case in which one degasification unit 2 is constituted by one degasification module 5 as in the degasification unit 2B shown in FIG 4, such a procedure is not necessary.

A plurality of degasification units 2, a housing 3 which houses the plurality of degasification units 2 and has an inlet 3a through which the liquid is supplied from outside and an outlet 3b through which the liquid is discharged to the outside, and a suction pipe 4 are prepared. Next, with the housing sealing portion 7 which partitions the internal space of the housing 3 into the upstream side region B on the inlet 3a side and the downstream side region C on the outlet 3b side via the plurality of degasification units 2, the plurality of the degasification units 2 are fixed to the housing 3. Further, the suction pipe 4 is installed such that the suction pipe 4 penetrates the housing 3 and is connected to both ends of the degasification module 5 to which the inside of the hollow fiber membrane 14 is opened. Then, the pressure losses of the liquid of the plurality of degasification units 2 are made different depending on the distance from the central axis L of the housing 3. Such setting of the pressure loss of the liquid can be performed by the various methods described above.

**In** the above, the embodiment of the present invention has been described, but the present invention is not limited to the above embodiments. For example, in the above embodiment, the configuration of the degasification unit has been specifically described, but as the degasification unit, degasification units in various configurations can be used. Further, in the above embodiment, it has been described that each degasification module includes a module inner pipe, but each degasification module may not include such a module inner pipe. In this case, for example, the hollow fiber membrane bundle (the woven fabric) of each degasification module is wound around the connection supply pipe directly.

Further, a use method and a utilization method of the degasification system of the present invention are not particularly limited, and the degasification system of the present invention can be used in the technical field for producing natural resources such as a jet boring method, an in situ leaching method (ISL), and water flooding. Specifically, the degasification system of the present invention may be used in the following method for producing natural resources. That is, the method for producing natural resources in the degasification system of the present invention includes a step of degasifying a liquid by supplying the liquid from the inlet to the plurality of degasification units and depressurizing an inside of the plurality of hollow fiber membranes of each of the plurality of degasification modules, and a press-in step of pressing-in the liquid degasified in the degasification step into a natural resource mining site. Here, examples of natural resources include metallic minerals such as copper and uranium, and fuel minerals such as crude oil, natural gas, shale oil, and shale gas. As the liquid, water is exemplified. In a case in which the natural resources are fuel minerals, examples of the liquid include seawater, accompanying water, and fracturing fluid. The accompanying water is the water generated when natural resources are produced. The degasification unit used in the present invention can be transferred to the place of use after the degasification unit is manufactured in advance by the connection of a plurality of degasification modules or can be manufactured by the connection of the degasification modules individually transported in the place of use of the degasification system of the present invention. In the unlikely event that a problem occurs in any one of the degasification modules or the degasification units, it is only necessary to replace the corresponding degasification module or the degasification unit, which is excellent in handleability during transportation in manufacturing and maintainability during use. Therefore, for example, it is also suitable for use at a mining site for natural resources.

### Reference Signs List

1 Degasification system
2, 2A, 2B, 2C, 2D Degasification unit
3 Housing
3a Inlet
3b Outlet
3c Inner peripheral surface
4 Suction pipe
5, 5A, 5B, 5C, 5D Degasification module
6, 6A, 6B Connection supply pipe
6a Supply port
6b Opening
7 Housing sealing portion (sealing portion)
8 Degasification unit supporting portion
10 Liquid supply path
11 Module inner pipe
11a Inner pipe opening
12 Hollow fiber membrane bundle
12a End portion
13 Module container (cylinder)
13a Discharge port
14 Hollow fiber membrane
15 Sealing portion
16 Outer region
17 Inner region
21 Degasification system
22, 22A, 22B, 22C, 22D Degasification unit
23 Housing
A Degasification region
B Upstream side region
C Downstream side region
L Central axis

## Claims

1. A degasification system (1) comprising:
a plurality of degasification units (2, 2A, 2B, 2C, 2D, 22, 22A, 22B, 22C, 22D) configured to degasify a liquid;
a cylindrical housing (3) configured to house the plurality of degasification units (2, 2A, 2B, 2C, 2D, 22, 22A, 22B, 22C, 22D) in parallel: and
a suction pipe (4) communicating with an inside of hollow fiber membranes (14) and penetrating the housing (3) to suction the inside of the hollow fiber membranes (14),
wherein each of the plurality of degasification units (2, 2A, 2B, 2C, 2D, 22, 22A, 22B, 22C, 22D) includes a hollow fiber membrane bundle (12) in which the plurality of hollow fiber membranes (14) are bundled in a cylindrical shape and a cylinder (13) in which the hollow fiber membrane bundle (12) is housed,
wherein the housing (3) has an inlet (3a) through which the liquid is supplied from outside, an outlet (3b) through which the liquid is discharged to the outside, and a sealing portion (7) which partitions an internal space of the housing (3) into an upstream side region (B) on the inlet (3a) side and a downstream side region (C) on the outlet (3b) side via the plurality of degasification units (2, 2A, 2B, 2C, 2D, 22, 22A, 22B, 22C, 22D),
wherein the plurality of degasification units (2, 2A, 2B, 2C, 2D, 22, 22A, 22B, 22C, 22D) are arranged in parallel so that the liquid is supplied in parallel from the inlet (3a),
wherein the plurality of degasification units (2, 2A, 2B, 2C, 2D, 22, 22A, 22B, 22C, 22D) are configured such that pressure losses of the liquid differ depending on a distance from a central axis (L) of the housing (3), so that a deviation of a flow rate of a liquid flowing through the plurality of degasification units (2, 2A, 2B, 2C, 2D, 22, 22A, 22B, 22C, 22D) is reduced, and
wherein the pressure loss of the liquid flowing through the degasification units (2, 2A, 2B, 2C, 2D, 22, 22A, 22B, 22C, 22D) increases the closer the degasification units (2, 2A, 2B, 2C, 2D, 22, 22A, 22B, 22C, 22D) are to the central axis of the housing (3).

2. The degasification system (1) according to claim 1,
wherein, among the plurality of degasification units (2, 2A, 2B, 2C, 2D, 22, 22A, 22B, 22C, 22D), the degasification unit (22A, 22B) that overlaps the inlet (3a) when seen in a direction along the central axis (L) is configured such that the pressure loss of the liquid therein is larger than that in the degasification unit (22C, 22D) that does not overlap the inlet (3a) when seen in a direction along the central axis (L).

3. The degasification system (1) according to claim 1 or 2,
wherein, in a case in which a region from an inner peripheral surface (3c) of the housing (3) to a position corresponding to 0.7 times an outer diameter of the degasification unit (2, 2A, 2B, 2C, 2D, 22, 22A, 22B, 22C, 22D) toward the central axis (L) side is defined as an outer region (16) and a region inside the outer region (16) is defined as an inner region (17),
in the inner region (17), the plurality of degasification units (2, 2A, 2B, 2C, 2D, 22, 22A, 22B, 22C, 22D) have an inner degasification unit (2, 2A, 2B, 2C, 2D, 22, 22A, 22B, 22C, 22D) and an outer degasification unit which is farther from the central axis (L) than the inner degasification unit, and
the inner degasification unit is configured such that the pressure loss of the liquid therein is larger than that in the outer degasification unit.

4. The degasification system (1) according to any one of claims 1 to 3,
wherein, in a case in which a region from an inner peripheral surface (3c) of the housing (3) to a position corresponding to 0.7 times an outer diameter of the degasification unit (2, 2A, 2B, 2C, 2D, 22, 22A, 22B, 22C, 22D) toward the central axis (L) side is defined as an outer region (16), a region inside the outer region (16) is defined as an inner region (17), and all the degasification units (2, 2A, 2B, 2C, 2D, 22, 22A, 22B, 22C, 22D) are disposed in the inner region (17),
the plurality of degasification units (2, 2A, 2B, 2C, 2D, 22, 22A, 22B, 22C, 22D) are configured such that the pressure loss of the liquid increases as the degasification unit (2, 2A, 2B, 2C, 2D, 22, 22A, 22B, 22C, 22D) becomes closer to the central axis (L).

5. The degasification system (1) according to any one of claims 1 to 3,
wherein, in a case in which a region from an inner peripheral surface (3c) of the housing (3) to a position corresponding to 0.7 times an outer diameter of the degasification unit (2, 2A, 2B, 2C, 2D, 22, 22A, 22B, 22C, 22D) toward the central axis (L) side is defined as an outer region (16), a region inside the outer region (16) is defined as an inner region (17), at least one degasification unit (2, 2A, 2B, 2C, 2D, 22, 22A, 22B, 22C, 22D) is disposed in the outer region (16), and remaining degasification units (2, 2A, 2B, 2C, 2D, 22, 22A, 22B, 22C, 22D) are disposed in the inner region (17),
the degasification units (2, 2A, 2B, 2C, 2D, 22, 22A, 22B, 22C, 22D) disposed in the inner region (17) are configured such that the pressure loss of the liquid increases as the degasification unit (2, 2A, 2B, 2C, 2D, 22, 22A, 22B, 22C, 22D) becomes closer to the central axis (L).

6. The degasification system (1) according to claim 5,
wherein the degasification unit (2, 2A, 2B, 2C, 2D, 22, 22A, 22B, 22C, 22D) disposed in the outer region (16) is configured such that the pressure loss of the liquid therein is larger than that in the degasification unit (2, 2A, 2B, 2C, 2D, 22, 22A, 22B, 22C, 22D) closest to the outer region (16) among the degasification units (2, 2A, 2B, 2C, 2D, 22, 22A, 22B, 22C, 22D) disposed in the inner region (17).

7. The degasification system (1) according to any one of claims 1 to 6,
wherein the degasification units (2, 2A, 2B, 2C, 2D, 22, 22A, 22B, 22C, 22D) include a plurality of degasification modules (5, 5A, 5B, 5C, 5D) which are connected to each other,
wherein each of the plurality of the degasification modules (5, 5A, 5B, 5C, 5D) includes a hollow fiber membrane bundle (12) having a plurality of hollow fiber membranes (14) arranged around a liquid supply path (10) through which a liquid is supplied and a cylinder (13) which houses the hollow fiber membrane bundle (12) and in which discharge ports (13a) for discharging the liquid are formed, and
wherein the degasification units (2, 2A, 2B, 2C, 2D, 22, 22A, 22B, 22C, 22D) have a connection supply pipe (6, 6A, 6B) which connects the liquid supply paths (10) of the plurality of degasification modules (5, 5A, 5B, 5C, 5D) in series and in which openings (6b) through which the liquid passes are formed at positions corresponding to the plurality of degasification modules (5, 5A, 5B, 5C, 5D) such that the liquid is supplied to the hollow fiber membrane bundles (12) of the plurality of degasification modules (5, 5A, 5B, 5C, 5D) in parallel.

8. A liquid degasification method in the degasification system (1) according to any one of claims 1 to 7, comprising:
a degasification step of degasifying a liquid by supplying the liquid from the inlet (3a) to the plurality of degasification units (2, 2A, 2B, 2C, 2D, 22, 22A, 22B, 22C, 22D) and depressurizing an inside of the plurality of hollow fiber membranes (14) of each of the plurality of degasification units (2, 2A, 2B, 2C, 2D, 22, 22A, 22B, 22C, 22D).

9. A method for manufacturing the degasification system (1) defined in claim 1, the method comprising:
preparing a plurality of degasification units (2, 2A, 2B, 2C, 2D, 22, 22A, 22B, 22C, 22D) each having a hollow fiber membrane bundle (12) in which the plurality of hollow fiber membranes (14) are bundled in a cylindrical shape and a cylinder (13) in which the hollow fiber membrane bundle (12) is housed, a cylindrical housing (3) which houses the plurality of degasification units (2, 2A, 2B, 2C, 2D, 22, 22A, 22B, 22C, 22D) and has an inlet (3a) through which a liquid is supplied from outside and an outlet (3b) through which the liquid is discharged to the outside, and a suction pipe (4);
fixing the plurality of the degasification units (2, 2A, 2B, 2C, 2D, 22, 22A, 22B, 22C, 22D) to the housing (3) with a sealing portion (7) which partitions an internal space of the housing (3) into an upstream side region (B) on the inlet (3a) side and a downstream side region (C) on the outlet (3b) side via the plurality of degasification units (2, 2A, 2B, 2C, 2D, 22, 22A, 22B, 22C, 22D); and
making pressure losses of the liquid of the plurality of degasification units (2, 2A, 2B, 2C, 2D, 22, 22A, 22B, 22C, 22D) different depending on a distance from a central axis (L) of the housing (3), so that a deviation of a flow rate of a liquid flowing through the plurality of degasification units (2, 2A, 2B, 2C, 2D, 22, 22A, 22B, 22C, 22D) is reduced.

10. The method for manufacturing a degasification system (1) according to claim 9, further comprising:
preparing a plurality of degasification modules (5, 5A, 5B, 5C, 5D) each having the hollow fiber membrane bundle (12) having the plurality of hollow fiber membranes (14) arranged around a liquid supply path (10) through which a liquid is supplied and the cylinder (13) which houses the hollow fiber membrane bundle (12) and in which discharge ports (13a) for discharging the liquid are formed, and a connection supply pipe (6, 6A, 6B) in which a plurality of openings (6b) through which the liquid passes are formed; and
inserting the connection supply pipe (6, 6A, 6B) into the liquid supply paths (10) of the plurality of degasification modules (5, 5A, 5B, 5C, 5D) to connect the liquid supply paths (10) of the plurality of degasification modules (5, 5A, 5B, 5C, 5D) in series by the connection supply pipe (6, 6A, 6B) and disposing the plurality of openings (6b) at positions corresponding to the plurality of degasification modules (5, 5A, 5B, 5C, 5D) such that the liquid is supplied to the hollow fiber membrane bundles (12) of the plurality of degasification modules (5, 5A, 5B, 5C, 5D) in parallel, to manufacture the degasification unit.

## Patentansprüche

1. Entgasungssystem (1), umfassend:
mehrere Entgasungseinheiten (2, 2A, 2B, 2C, 2D, 22, 22A, 22B, 22C, 22D), die ausgestaltet sind, um eine Flüssigkeit zu entgasen;
ein zylindrisches Gehäuse (3), das ausgestaltet ist, um die mehreren Entgasungseinheiten (2, 2A, 2B, 2C, 2D, 22, 22A, 22B, 22C, 22D) parallel unterzubringen; und
ein Saugrohr (4), das zum Absaugen des Inneren der Hohlfasermembranen (14) mit dem Inneren der Hohlfasermembranen (14) in Verbindung steht und das Gehäuse (3) durchdringt,
wobei jede der mehreren Entgasungseinheiten (2, 2A, 2B, 2C, 2D, 22, 22A, 22B, 22C, 22D) ein Hohlfasermembranbündel (12), in dem die mehreren Hohlfasermembranen (14) in einer zylindrischen Form gebündelt sind, und einen Zylinder (13), in dem das Hohlfasermembranbündel (12) untergebracht ist,
aufweist,
wobei das Gehäuse (3) einen Einlass (3a), durch den die Flüssigkeit von außen zugeführt wird, einen Auslass (3b), durch den die Flüssigkeit nach außen abgegeben wird, und einen Dichtungsabschnitt (7) aufweist, der einen Innenraum des Gehäuses (3) in einen stromaufwärtsseitigen Bereich (B) auf der Seite des Einlasses (3a) und einen stromabwärtsseitigen Bereich (C) auf der Seite des Auslasses (3b) über die mehreren Entgasungseinheiten (2, 2A, 2B, 2C, 2D, 22, 22A, 22B, 22C, 22D) unterteilt,
wobei die mehreren Entgasungseinheiten (2, 2A, 2B, 2C, 2D, 22, 22A, 22B, 22C, 22D) parallel angeordnet sind, so dass die Flüssigkeit parallel von dem Einlass (3a) zugeführt wird,
wobei die mehreren Entgasungseinheiten (2, 2A, 2B, 2C, 2D, 22, 22A, 22B, 22C, 22D) so ausgestaltet sind, dass Druckverluste der Flüssigkeit in Abhängigkeit von einem Abstand von einer Mittelachse (L) des Gehäuses (3) unterschiedlich sind, so dass eine Abweichung einer Strömungsgeschwindigkeit einer durch die mehreren Entgasungseinheiten (2, 2A, 2B, 2C, 2D, 22, 22A, 22B, 22C, 22D) strömenden Flüssigkeit verringert wird, und
wobei der Druckverlust der durch die Entgasungseinheiten (2, 2A, 2B, 2C, 2D, 22, 22A, 22B, 22C, 22D) strömenden Flüssigkeit zunimmt, je näher die Entgasungseinheiten (2, 2A, 2B, 2C, 2D, 22, 22A, 22B, 22C, 22D) an der Mittelachse des Gehäuses (3) sind.

2. Entgasungssystem (1) nach Anspruch 1,
wobei unter den mehreren Entgasungseinheiten (2, 2A, 2B, 2C, 2D, 22, 22A, 22B, 22C, 22D) die Entgasungseinheit (22A, 22B), die den Einlass (3a) in einer Richtung entlang der Mittelachse (L) gesehen überlappt, so ausgestaltet ist, dass der Druckverlust der Flüssigkeit darin größer ist als der in der Entgasungseinheit (22C, 22D), die den Einlass (3a) in einer Richtung entlang der Mittelachse (L) gesehen nicht überlappt.

3. Entgasungssystem (1) nach Anspruch 1 oder 2,
wobei in einem Fall, in dem ein Bereich von einer inneren Umfangsfläche (3c) des Gehäuses (3) bis zu einer Position, die dem 0,7-fachen eines Außendurchmessers der Entgasungseinheit (2, 2A, 2B, 2C, 2D, 22, 22A, 22B, 22C, 22D) entspricht, in Richtung der Seite der Mittelachse (L) als ein äußerer Bereich (16) definiert ist und ein Bereich innerhalb des äußeren Bereichs (16) als ein innerer Bereich (17) definiert ist,
in dem inneren Bereich (17) die mehreren Entgasungseinheiten (2, 2A, 2B, 2C, 2D, 22, 22A, 22B, 22C, 22D) eine innere Entgasungseinheit (2, 2A, 2B, 2C, 2D, 22, 22A, 22B, 22C, 22D) und eine äußere Entgasungseinheit aufweisen, die weiter von der Mittelachse (L) entfernt ist als die innere Entgasungseinheit, und
die innere Entgasungseinheit so ausgestaltet ist, dass der Druckverlust der darin befindlichen Flüssigkeit größer ist als der in der äußeren Entgasungseinheit.

4. Entgasungssystem (1) nach einem der Ansprüche 1 bis 3,
wobei in einem Fall, in dem ein Bereich von einer inneren Umfangsfläche (3c) des Gehäuses (3) bis zu einer Position, die dem 0,7-fachen eines Außendurchmessers der Entgasungseinheit (2, 2A, 2B, 2C, 2D, 22, 22A, 22B, 22C, 22D) entspricht, in Richtung der Seite der Mittelachse (L) als ein äußerer Bereich (16) definiert ist, ein Bereich innerhalb des äußeren Bereichs (16) als ein innerer Bereich (17) definiert ist und alle Entgasungseinheiten (2, 2A, 2B, 2C, 2D, 22, 22A, 22B, 22C, 22D) in dem inneren Bereich (17) angeordnet sind,
die mehreren Entgasungseinheiten (2, 2A, 2B, 2C, 2D, 22, 22A, 22B, 22C, 22D) so ausgestaltet sind, dass der Druckverlust der Flüssigkeit zunimmt, wenn die Entgasungseinheit (2, 2A, 2B, 2C, 2D, 22, 22A, 22B, 22C, 22D) der Mittelachse (L) näher kommt.

5. Entgasungssystem (1) nach einem der Ansprüche 1 bis 3,
wobei in einem Fall, in dem ein Bereich von einer inneren Umfangsfläche (3c) des Gehäuses (3) bis zu einer Position, die dem 0,7-fachen eines Außendurchmessers der Entgasungseinheit (2, 2A, 2B, 2C, 2D, 22, 22A, 22B, 22C, 22D) entspricht, in Richtung der Seite der Mittelachse (L) als ein Außenbereich (16) definiert ist, ein Bereich innerhalb des Außenbereichs (16) als ein Innenbereich (17) definiert ist, mindestens eine Entgasungseinheit (2, 2A, 2B, 2C, 2D, 22, 22A, 22B, 22C, 22D) in dem äußeren Bereich (16) angeordnet ist und die übrigen Entgasungseinheiten (2, 2A, 2B, 2C, 2D, 22, 22A, 22B, 22C, 22D) in dem inneren Bereich (17) angeordnet sind,
die in dem inneren Bereich (17) angeordneten Entgasungseinheiten (2, 2A, 2B, 2C, 2D, 22, 22A, 22B, 22C, 22D) so ausgestaltet sind, dass der Druckverlust der Flüssigkeit zunimmt, wenn die Entgasungseinheit (2, 2A, 2B, 2C, 2D, 22, 22A, 22B, 22C, 22D) der Mittelachse (L) näher kommt.

6. Entgasungssystem (1) nach Anspruch 5,
wobei die im äußeren Bereich (16) angeordnete Entgasungseinheit (2, 2A, 2B, 2C, 2D, 22, 22A, 22B, 22C, 22D) so ausgestaltet ist, dass der Druckverlust der darin befindlichen Flüssigkeit größer ist als der in der Entgasungseinheit (2, 2A, 2B, 2C, 2D, 22, 22A, 22B, 22C, 22D), die von den Entgasungseinheiten (2, 2A, 2B, 2C, 2D, 22, 22A, 22B, 22C, 22D), die in dem inneren Bereich (17) angeordnet sind, dem äußeren Bereich (16) am nächsten ist.

7. Entgasungssystem (1) nach einem der Ansprüche 1 bis 6,
wobei die Entgasungseinheiten (2, 2A, 2B, 2C, 2D, 22, 22A, 22B, 22C, 22D) mehrere Entgasungsmodule (5, 5A, 5B, 5C, 5D) aufweisen, die miteinander verbunden sind,
wobei jedes der mehreren Entgasungsmodule (5, 5A, 5B, 5C, 5D) ein Hohlfasermembranbündel (12) mit mehreren Hohlfasermembranen (14), die um einen Flüssigkeitszuführungspfad (10), durch den eine Flüssigkeit zugeführt wird, angeordnet sind, und einen Zylinder (13), der das Hohlfasermembranbündel (12) unterbringt und in dem Auslassöffnungen (13a) zum Abgeben der Flüssigkeit ausgebildet sind, aufweist, und
wobei die Entgasungseinheiten (2, 2A, 2B, 2C, 2D, 22, 22A, 22B, 22C, 22D) ein Verbindungszuführungsrohr (6, 6A, 6B) aufweisen, das die
Flüssigkeitszuführungspfade (10) der mehreren Entgasungsmodule (5, 5A, 5B, 5C, 5D) in Reihe verbindet und in der Öffnungen (6b), durch die die Flüssigkeit hindurchtritt, an Positionen ausgebildet sind, die den mehreren Entgasungsmodulen (5, 5A, 5B, 5C, 5D) entsprechen, so dass die Flüssigkeit den Hohlfasermembranbündeln (12) der mehreren Entgasungsmodule (5, 5A, 5B, 5C, 5D) parallel zugeführt wird.

8. Flüssigkeitsentgasungsverfahren in dem Entgasungssystem (1) nach einem der Ansprüche 1 bis 7, umfassend:
einen Entgasungsschritt eines Entgasens einer Flüssigkeit durch Zuführen der Flüssigkeit von dem Einlass (3a) zu den mehreren Entgasungseinheiten (2, 2A, 2B, 2C, 2D, 22, 22A, 22B, 22C, 22D) und Druckentlasten einer Innenseite der mehreren Hohlfasermembranen (14) von jeder der mehreren Entgasungseinheiten (2, 2A, 2B, 2C, 2D, 22, 22A, 22B, 22C, 22D).

9. Verfahren zum Herstellen des in Anspruch 1 definierten Entgasungssystems (1), wobei das Verfahren umfasst:
Vorbereiten mehrerer Entgasungseinheiten (2, 2A, 2B, 2C, 2D, 22, 22A, 22B, 22C, 22D), die jeweils ein Hohlfasermembranbündel (12), in dem die mehreren Hohlfasermembranen (14) in einer zylindrischen Form gebündelt sind, und einen Zylinder (13), in dem das Hohlfasermembranbündel (12) untergebracht ist, aufweisen, eines zylindrischen Gehäuses (3), in dem die mehreren Entgasungseinheiten (2, 2A, 2B, 2C, 2D, 22, 22A, 22B, 22C, 22D) untergebracht sind und das einen Einlass (3a), durch den eine Flüssigkeit von außen zugeführt wird, und einen Auslass (3b), durch den die Flüssigkeit nach außen abgegeben wird, aufweist, und eines Saugrohrs (4);
Befestigen der mehreren Entgasungseinheiten (2, 2A, 2B, 2C, 2D, 22, 22A, 22B, 22C, 22D) an dem Gehäuse (3) mit einem Dichtungsabschnitt (7), der einen Innenraum des Gehäuses (3) in einen stromaufwärtsseitigen Bereich (B) auf der Seite des Einlasses (3a) und einen stromabwärtsseitigen Bereich (C) auf der Seite des Auslasses (3b) über die mehreren Entgasungseinheiten (2, 2A, 2B, 2C, 2D, 22, 22A, 22B, 22C, 22D) unterteilt; und
Herstellen von unterschiedlichen Druckverlusten der Flüssigkeit der mehreren Entgasungseinheiten (2, 2A, 2B, 2C, 2D, 22, 22A, 22B, 22C, 22D) in Abhängigkeit von einem Abstand von einer Mittelachse (L) des Gehäuses (3), so dass eine Abweichung einer Strömungsrate einer durch die mehreren Entgasungseinheiten (2, 2A, 2B, 2C, 2D, 22, 22A, 22B, 22C, 22D) strömenden Flüssigkeit reduziert wird.

10. Verfahren zum Herstellen eines Entgasungssystems (1) nach Anspruch 9, ferner umfassend:
Vorbereiten mehrerer Entgasungsmodule (5, 5A, 5B, 5C, 5D), die jeweils das Hohlfasermembranbündel (12) mit den mehreren Hohlfasermembranen (14), die um einen Flüssigkeitszuführungspfad (10), durch den eine Flüssigkeit zugeführt wird, angeordnet sind, und den Zylinder (13), der das Hohlfasermembranbündel (12) unterbringt und in dem Ablassöffnungen (13a) zum Abgeben der Flüssigkeit ausgebildet sind, aufweisen, und eines Verbindungszuführungsrohrs (6, 6A, 6B), in dem mehrere Öffnungen (6b), durch die die Flüssigkeit hindurchtritt, ausgebildet sind, und
Einführen des Verbindungszuführungsrohrs (6, 6A, 6B) in die Flüssigkeitszuführungspfade (10) der mehreren Entgasungsmodule (5, 5A, 5B, 5C, 5D), um die Flüssigkeitszuführungspfade (10) der mehreren Entgasungsmodule (5, 5A, 5B, 5C, 5D) durch das Verbindungszuführungsrohr (6, 6A, 6B) in Reihe zu verbinden, und Anordnen der mehreren Öffnungen (6b) an Positionen, die den mehreren Entgasungsmodulen (5, 5A, 5B, 5C, 5D) entsprechen, so dass die Flüssigkeit den Hohlfasermembranbündeln (12) der mehreren Entgasungsmodule (5, 5A, 5B, 5C, 5D) parallel zugeführt wird, um die Entgasungseinheit herzustellen.

## Revendications

1. Système de dégazage (1), comprenant :
une pluralité d'unités de dégazage (2, 2A, 2B, 2C, 2D, 22, 22A, 22B, 22C, 22D) conçues pour dégazer un liquide ;
un boîtier cylindrique (3) conçu pour abriter la pluralité d'unités de dégazage (2, 2A, 2B, 2C, 2D, 22, 22A, 22B, 22C, 22D) en parallèle : et
un tuyau d'aspiration (4) communiquant avec un intérieur de membranes en fibres creuses (14) et pénétrant dans le boîtier (3) pour aspirer l'intérieur des membranes en fibres creuses (14),
dans lequel chacune de la pluralité d'unités de dégazage (2, 2A, 2B, 2C, 2D, 22, 22A, 22B, 22C, 22D) comporte un faisceau de membranes en fibres creuses (12) dans lequel la pluralité de membranes en fibres creuses (14) est regroupée sous une forme cylindrique et un cylindre (13) dans lequel le faisceau de membranes en fibres creuses (12) est logé,
dans lequel le boîtier (3) a une entrée (3a) à travers laquelle le liquide est fourni depuis l'extérieur, une sortie (3b) à travers laquelle le liquide est évacué vers l'extérieur, et une partie d'étanchéité (7) qui sépare un espace interne du boîtier (3) en une région latérale en amont (B) du côté de l'entrée (3a) et une région latérale en aval (C) du côté de la sortie (3b) par l'intermédiaire de la pluralité d'unités de dégazage (2, 2A, 2B, 2C, 2D, 22, 22A, 22B, 22C, 22D),
dans lequel la pluralité d'unités de dégazage (2, 2A, 2B, 2C, 2D, 22, 22A, 22B, 22C, 22D) est agencée en parallèle de telle sorte que le liquide est fourni en parallèle à partir de l'entrée (3a),
dans lequel la pluralité d'unités de dégazage (2, 2A, 2B, 2C, 2D, 22, 22A, 22B, 22C, 22D) est conçue de telle sorte que les pertes de pression du liquide diffèrent en fonction d'une distance par rapport à un axe central (L) du boîtier (3), de telle sorte qu'une déviation d'un débit d'un liquide circulant à travers la pluralité d'unités de dégazage (2, 2A, 2B, 2C, 2D, 22, 22A, 22B, 22C, 22D) est réduite, et
dans lequel la perte de pression du liquide circulant à travers les unités de dégazage (2, 2A, 2B, 2C, 2D, 22, 22A, 22B, 22C, 22D) augmente à mesure que les unités de dégazage (2, 2A, 2B, 2C, 2D, 22, 22A, 22B, 22C, 22D) sont plus proches de l'axe central du boîtier (3).

2. Système de dégazage (1) selon la revendication 1,
dans lequel, parmi la pluralité d'unités de dégazage (2, 2A, 2B, 2C, 2D, 22, 22A, 22B, 22C, 22D), l'unité de dégazage (22A, 22B) qui chevauche l'entrée (3a) lorsqu'elle est vue dans une direction le long de l'axe central (L) est conçue de telle sorte que la perte de pression du liquide de celle-ci est plus importante que celle de l'unité de dégazage (22C, 22D) qui ne chevauche pas l'entrée (3a) lorsqu'elle est vue dans une direction le long de l'axe central (L).

3. Système de dégazage (1) selon la revendication 1 ou 2,
dans lequel, dans le cas où une région allant d'une surface périphérique intérieure (3c) du boîtier (3) à une position correspondant à 0,7 fois un diamètre extérieur de l'unité de dégazage (2, 2A, 2B, 2C, 2D, 22, 22A, 22B, 22C, 22D) vers le côté de l'axe central (L) est définie comme une région extérieure (16) et une région à l'intérieur de la région extérieure (16) est définie comme une région intérieure (17),
dans la région intérieure (17), la pluralité d'unités de dégazage (2, 2A, 2B, 2C, 2D, 22, 22A, 22B, 22C, 22D) a une unité de dégazage intérieure (2, 2A, 2B, 2C, 2D, 22, 22A, 22B, 22C, 22D) et une unité de dégazage extérieure qui est plus éloignée de l'axe central (L) que l'unité de dégazage intérieure, et
l'unité de dégazage intérieure est conçue de telle sorte que la perte de pression du liquide de celle-ci est plus importante que celle de l'unité de dégazage extérieure.

4. Système de dégazage (1) selon l'une quelconque des revendications 1 à 3,
dans lequel, dans le cas où une région allant d'une surface périphérique intérieure (3c) du boîtier (3) à une position correspondant à 0,7 fois le diamètre extérieur de l'unité de dégazage (2, 2A, 2B, 2C, 2D, 22, 22A, 22B, 22C, 22D) vers le côté de l'axe central (L) est définie comme une région extérieure (16), une région à l'intérieur de la région extérieure (16) est définie comme une région intérieure (17), et toutes les unités de dégazage (2, 2A, 2B, 2C, 2D, 22, 22A, 22B, 22C, 22D) sont disposées dans la région intérieure (17),
la pluralité d'unités de dégazage (2, 2A, 2B, 2C, 2D, 22, 22A, 22B, 22C, 22D) est conçue de telle sorte que la perte de pression du liquide augmente à mesure que l'unité de dégazage (2, 2A, 2B, 2C, 2D, 22, 22A, 22B, 22C, 22D) se rapproche de l'axe central (L).

5. Système de dégazage (1) selon l'une quelconque des revendications 1 à 3,
dans lequel, dans le cas où une région allant d'une surface périphérique intérieure (3c) du boîtier (3) à une position correspondant à 0,7 fois un diamètre extérieur de l'unité de dégazage (2, 2A, 2B, 2C, 2D, 22, 22A, 22B, 22C, 22D) vers le côté de l'axe central (L) est définie comme une région extérieure (16), une région à l'intérieur de la région extérieure (16) est définie comme une région intérieure (17), au moins une unité de dégazage (2, 2A, 2B, 2C, 2D, 22, 22A, 22B, 22C, 22D) est disposée dans la région extérieure (16), et les unités de dégazage restantes (2, 2A, 2B, 2C, 2D, 22, 22A, 22B, 22C, 22D) sont disposées dans la région intérieure (17),
les unités de dégazage (2, 2A, 2B, 2C, 2D, 22, 22A, 22B, 22C, 22D) disposées dans la région intérieure (17) sont conçues de telle sorte que la perte de pression du liquide augmente à mesure que l'unité de dégazage (2, 2A, 2B, 2C, 2D, 22, 22A, 22B, 22C, 22D) se rapproche de l'axe central (L).

6. Système de dégazage (1) selon la revendication 5,
dans lequel l'unité de dégazage (2, 2A, 2B, 2C, 2D, 22, 22A, 22B, 22C, 22D) disposée dans la région extérieure (16) est conçue de telle sorte que la perte de pression du liquide de celle-ci est plus importante que celle de l'unité de dégazage (2, 2A, 2B, 2C, 2D, 22, 22A, 22B, 22C, 22D) la plus proche de la région extérieure (16) parmi les unités de dégazage (2, 2A, 2B, 2C, 2D, 22, 22A, 22B, 22C, 22D) disposées dans la région intérieure (17).

7. Système de dégazage (1) selon l'une quelconque des revendications 1 à 6,
dans lequel les unités de dégazage (2, 2A, 2B, 2C, 2D, 22, 22A, 22B, 22C, 22D) comportent une pluralité de modules de dégazage (5, 5A, 5B, 5C, 5D) qui sont reliés les uns aux autres,
dans lequel chacune de la pluralité de modules de dégazage (5, 5A, 5B, 5C, 5D) comporte un faisceau de membranes en fibres creuses (12) ayant une pluralité de membranes en fibres creuses (14) agencée autour d'une voie d'alimentation en liquide (10) à travers laquelle un liquide est fourni et un cylindre (13) qui abrite le faisceau de membranes en fibres creuses (12) et dans lequel sont formés des orifices de décharge (13 a) pour décharger le liquide, et
dans lequel les unités de dégazage (2, 2A, 2B, 2C, 2D, 22, 22A, 22B, 22C, 22D) ont un tuyau d'alimentation de connexion (6, 6A, 6B) qui relie les voies d'alimentation en liquide (10) de la pluralité de modules de dégazage (5, 5A, 5B, 5C, 5D) en série et dans lequel des ouvertures (6b) à travers lesquelles le liquide passe sont formées au niveau des positions correspondant à la pluralité de modules de dégazage (5, 5A, 5B, 5C, 5D) de telle sorte que le liquide est fourni aux faisceaux de membranes en fibres creuses (12) de la pluralité de modules de dégazage (5, 5A, 5B, 5C, 5D) en parallèle.

8. Procédé de dégazage des liquides dans le système de dégazage (1) selon l'une quelconque des revendications 1 à 7, comprenant :
une étape de dégazage consistant à dégazer un liquide en fournissant le liquide depuis l'entrée (3a) vers la pluralité d'unités de dégazage (2, 2A, 2B, 2C, 2D, 22, 22A, 22B, 22C, 22D) et en dépressurisant un intérieur de la pluralité de membranes à fibres creuses (14) de chacune de la pluralité d'unités de dégazage (2, 2A, 2B, 2C, 2D, 22, 22A, 22B, 22C, 22D).

9. Procédé permettant la fabrication d'un système de dégazage (1) défini selon la revendication 1, le procédé comprenant :
la préparation d'une pluralité d'unités de dégazage (2, 2A, 2B, 2C, 2D, 22, 22A, 22B, 22C, 22D) ayant chacune un faisceau de membranes en fibres creuses (12) dans lequel la pluralité de membranes en fibres creuses (14) est regroupée dans une forme cylindrique et un cylindre (13) dans lequel le faisceau de membranes en fibres creuses (12) est logé, un boîtier cylindrique (3) qui abrite la pluralité d'unités de dégazage (2, 2A, 2B, 2C, 2D, 22, 22A, 22B, 22C, 22D) et possède une entrée (3a) à travers laquelle un liquide est fourni de l'extérieur et une sortie (3b) à travers laquelle le liquide est déchargé vers l'extérieur, et un tuyau d'aspiration (4) ;
la fixation de la pluralité d'unités de dégazage (2, 2A, 2B, 2C, 2D, 22, 22A, 22B, 22C, 22D) au boîtier (3) avec une partie d'étanchéité (7) qui sépare un espace interne du boîtier (3) en une région latérale en amont (B) du côté de l'entrée (3a) et une région latérale en aval (C) du côté de la sortie (3b) par l'intermédiaire de la pluralité d'unités de dégazage (2, 2A, 2B, 2C, 2D, 22, 22A, 22B, 22C, 22D) ; et
rendre les pertes de pression du liquide de la pluralité d'unités de dégazage (2, 2A, 2B, 2C, 2D, 22, 22A, 22B, 22C, 22D) différentes en fonction d'une distance par rapport à un axe central (L) du boîtier (3), de telle sorte qu'une déviation d'un débit d'un liquide circulant à travers la pluralité d'unités de dégazage (2, 2A, 2B, 2C, 2D, 22, 22A, 22B, 22C, 22D) est réduite.

10. Procédé permettant la fabrication d'un système de dégazage (1) selon la revendication 9, comprenant en outre :
la préparation d'une pluralité de modules de dégazage (5, 5A, 5B, 5C, 5D) ayant chacune le faisceau de membranes en fibres creuses (12) ayant la pluralité de membranes en fibres creuses (14) agencées autour d'une voie d'alimentation en liquide (10) à travers laquelle un liquide est fourni et le cylindre (13) qui abrite le faisceau de membranes en fibres creuses (12) et dans lequel sont formés des orifices de décharge (13a) pour décharger le liquide, et un tuyau d'alimentation de connexion (6, 6A, 6B) dans lequel est formée une pluralité d'orifices (6b) à travers lesquels le liquide passe ; et
l'insertion du tuyau de fourniture de connexion (6, 6A, 6B) dans les voies d'alimentation en liquide (10) de la pluralité de modules de dégazage (5, 5A, 5B, 5C, 5D) pour relier les voies d'alimentation en liquide (10) de la pluralité de modules de dégazage (5, 5A, 5B, 5C, 5D) en série par le tuyau de fourniture de connexion (6, 6A, 6B) et en disposant la pluralité d'ouvertures (6b) au niveau de positions correspondant à la pluralité de modules de dégazage (5, 5A, 5B, 5C, 5D) de telle sorte que le liquide est fourni aux faisceaux de membranes en fibres creuses (12) de la pluralité de modules de dégazage (5, 5A, 5B, 5C, 5D) en parallèle, afin de fabriquer l'unité de dégazage.
